# EUROPEAN PATENT SPECIFICATION

(11) **EP 4 387 326 B1**
(45) Date of publication and mention of the grant of the patent: **12.02.2025**
(21) Application number: 22212870.4
(22) Date of filing: 12.12.2022
(51) Int. Cl.: H04W 12/37, H04W 36/14, H04W 36/00, H04L 9/40

(54) **METHOD, USER EQUIPMENT, SYSTEM, COMPUTER PROGRAM AND COMPUTER-READABLE MEDIUM FOR A USER EQUIPMENT TO COMMUNICATE WITH AT LEAST TWO NETWORK FUNCTIONS OR SERVICES OVER ONE OR MORE TELECOMMUNICATION NETWORKS**
VERFAHREN, TEILNEHMERGERÄT, SYSTEM, KOMPUTERPROGRAM UND COMPUTERLESBARES MEDIUM ZUR KOMMUNIKATION ZWISCHEN EINEM TEILNEHMERGERÄT UND WENIGSTENS ZWEI NETZWERKDIENSTE ODER NETZWERKFUNKTIONEN ÜBER WENIGSTENS EINEM TELEKOMMUNIKATIONSNETZWERK
MÉTHODE, DISPOSITIF UTILISATEUR, SYSTÈME, PROGRAMME D'ORDINATEUR ET SUPPORT LISIBLE PAR ORDINATEUR POUR UNE COMMUNICATION ENTRE UN DISPOSITIF UTILISATEUR ET AU MOINS DEUX SERVICES OU FONCTIONS DE RÉSEAU, AU MOYEN D'AU MOINS UN RÉSEAU DE TÉLÉCOMMUNICATION,

(43) Date of publication of application: 19.06.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- WO-A1-2022/064424
- WO-A1-2022/087964

## Description

### BACKGROUND

The present invention relates a method for operating a user equipment with a telecommunications network and for communicating with at least two of a plurality of network functions or services of the telecommunications network or of a further telecommunications network.

Furthermore, the present invention relates to a user equipment for being operated with a telecommunications network and for communicating with at least two of a plurality of network functions or services of the telecommunications network or of a further telecommunications network.

Additionally, the present invention relates to a system or telecommunications network for operating a user equipment with the telecommunications network and for providing at least two of a plurality of network functions or services of the telecommunications network or of a further telecommunications network.

Furthermore, the present invention relates to a program and to a computer-readable medium for operating, according to the inventive method, a user equipment with a telecommunications network and for communicating with at least two of a plurality of network functions or services of the telecommunications network or of a further telecommunications network.

In conventionally known telecommunications networks, the interface used between the user equipment, going via the access network (such as a radio access network, RAN), on the one hand, and the core network (CN), is based on the non-access stratum protocol stack, or NAS protocol stack. From a system architecture perspective, NAS communication refers to the logical interface between the user equipment and the CN. In the example of a mobile communication network - especially a mobile communication network according to the 5G standard -, the non-access stratum protocol, typically a non-access stratum mobility management protocol, NAS-MM, is, e.g., transported on top of the NG-AP protocol stack (gNB-5G core application protocol stack), the NG-AP protocol stack typically comprising the NG-AP on top of an L1 layer (physical layer), an L2 layer (data link layer), an IP (internet protocol) layer, and an SCTP (stream control transmission protocol) layer, thereby, e.g. realizing the N2 interface, or N2-reference point, between the 5G access network and the access and mobility management function (AMF) network function or service of the core (5G) core network. The NG-AP protocol stack (NG-AP being a 3GPP protocol defined in TS 38.413) is used to transport control plane (CP) information between a user equipment and the core network between the radio access network and the access and mobility function (AMF). In the considered case, the (radio) access network acts as a relay for the non-access stratum signaling (NAS-MM) - between the 5G access network protocol layer (used between the user equipment and a station entity, especially a gNodeB) and the NG-AP protocol stack which is transported to the AMF using NG-AP as lower protocol layer - , and the (radio) access network (AN) has no access to (the content of) the non-access stratum information (i.e. the NAS-MM communication); it just relays the information to the access and mobility management function (AMF), i.e. the so-called non-access stratum security context is terminated at the access and mobility management function (AMF). In conventionally known telecommunications networks, the (radio) access network determines the AMF network function or service (out of, potentially, a plurality of different (instances of) AMF network functions or services within a telecommunications network) with which to communicate with based on configuration; typically, based on the requested telecommunications network (especially a public land mobile network, PLMN) and a network slice (or network slices), the (radio) access network routes a given registration request (being transmitted by a user equipment) to one AMF network function or service, or, potentially, one out of a list of possible AMFs.

In conventionally known telecommunications networks, the non-access stratum communication relates to control plane information exchanged between the UE and CN elements or network nodes of the core network: E.g., in the case of a 5G system, that includes communication between the user equipment and a plurality of different network function functionalities, such as, e.g., AMF (for access and mobility), SMF (for session management), PCF (for policy information), and LMF (for location information). Thereby, the access and mobility management function serves as a central element for the non-access stratum communication between the user equipment and the (other kinds of) network functions or services of the core network (i.e. the different network function functionalities), and the (non-access stratum) communication of the user equipment towards other network function functionalities (i.e. network functions or services other than the access and mobility management function) is realized by a mixture of using, on the one hand, non-access stratum protocol for the transport between the radio access network and the access and mobility management function, and, on the other hand, Nxxx service based communication (e.g. N11/Nsmf towards NAS-SM of the session management function, N20/Nsmsf towards the short message service function, N15/Npcf towards UE policy of the policy and charging function, or NL1/Nlmf towards LCS of the location management function) between the access and mobility management function and the other kinds of network functions or services (or network function functionalities).

Regarding security in conventionally known telecommunications networks, when the user equipment registers with the telecommunications network, a non-access stratum security context is created. The security context applies to the non-access stratum connection, i.e. between the user equipment and the access and mobility management function; this means that Information sent via the access and mobility management function (e.g. towards the session management function, etc.) is visible to the access and mobility management function. This is a drawback in case that it cannot be assured (or that it is not strived for to assure) that all components or network functions or services of a core network are part of a trusted domain; the same drawback applies to roaming with regard to the home and/or visited networks. This is a result of the current architecture where a single control plane towards the core network is established, i.e. NAS communication, especially the NAS security context, is terminated at the AMF.
However and on the other hand, setting up different and separated security contexts between the user equipment and different components or network functions or services of either a core network, or - in a roaming scenario - of a visited and home network, would result in information that is sent via a network node (e.g. of the visited network, in a roaming scenario, or of the access and mobility management function) towards another network node (e.g. of the home network, in a roaming scenario, or the session management function) is not visible, and, hence, is not able to be used by the relaying network node.

### SUMMARY

An object of the present invention is to provide a technically simple, effective and cost effective solution for operating a user equipment with a telecommunications network and for communicating with at least two of a plurality of network functions or services of the telecommunications network or of a further telecommunications network (i.e. either at least two of a plurality of network functions or services of the telecommunications network, or at least one of a plurality of network functions or services of the telecommunications network, and at least one of a plurality of network functions or services of a further telecommunications network), wherein the user equipment is operated using at least a first non-access stratum communication link and a second non-access stratum communication link, the first non-access stratum communication link being established between the user equipment and a first network function or service of the plurality of network functions or services, and the second non-access stratum communication link being established between the user equipment and a second network function or service, wherein the first non-access stratum communication link involves establishing a first non-access stratum security context between the user equipment and the first network function or service and the second non-access stratum communication link involves establishing a second non-access stratum security context between the user equipment and the second network function or service. A further object of the present invention is to provide a corresponding user equipment, a corresponding system or telecommunications network, a corresponding user equipment bootstrapping function or service, and a corresponding program and computer-readable medium.

The object of the present invention is achieved by a method according to claim 1.

According to the present invention, it is advantageously possible to combine a higher level of security and/or trust (especially by means of the first non-access stratum communication link involving establishing a first non-access stratum security context between the user equipment and the first network function or service, and the second non-access stratum communication link involving establishing a second non-access stratum security context between the user equipment and the second network function or service) with the possibility to provide for a solution to link (or chain) different non-access stratum communication links or non-access stratum security contexts together - or, otherwise stated, to provide for a possibility to realize a sort of connection between different non-access stratum communication links and/or non-access stratum security contexts, especially in case that the different involved network nodes need to share at least a part of the information content that is exchanged between these network nodes and the user equipment. Furthermore according to the present invention, by means of using first and second non-access stratum endpoint information, direct non-access stratum communication links, including non-access stratum security contexts and/or including conducting authentication of the user equipment with regard to the respective endpoints of the non-access stratum security contexts, are realized, leading to the possibility to realize, or use, a zero trust architecture.
Hence, especially direct (or end-to-end) non-access stratum communication links between the user equipment and respective instances of a network function or service are easily and efficiently possible to be established according to the present invention. Typically, the telecommunications network comprises a plurality of network functions or services, and these network functions or services are able to provide different kinds of network function functionalities - within the telecommunications network, but also to, or towards, the user equipment. According to the present invention, the establishment of the (first and/or second) non-access stratum communication link between the user equipment and a (first and/or second) network function or service also involves establishing a non-access stratum security context between the user equipment and the corresponding (first and/or second) network function or service, this non-access stratum security context corresponding to the non-access stratum communication link.

This is in contrast to the conventional architecture of such non-access stratum communication links that, typically, rely on a non-access stratum security context being established primarily between the user equipment and the access and mobility management function, and wherein the security context or the trust relationship towards other network functions or services or network nodes (i.e. other than the access and mobility management function) relies purely on the assumption that, the core network of the telecommunications network is considered a trusted domain and trust between network elements within such trusted domain is provided on a hop-by-hop basis only.

It is furthermore advantageously possible according to the present invention that - instead of using only one network function or service, especially only or principally the access and mobility management function, as the principal trusted termination of the non-access stratum security context - the user equipment, transparently via the (radio) access network, maintains a non-access stratum security context with multiple network functions or services (or other entities) of the core network for different purposes, i.e. maintains multiple non-access stratum security contexts.

Especially, this advantageously provides the possibility that network functions or services, as part of the core network of the telecommunications network, are able to be placed in different trust domains, i.e. it is not necessary any more to place these network functions or services in the same trust domain, potentially reducing complexity within the core network and, hence, leading potentially to a higher security and trust level within the telecommunications network (especially as less complexity is typically less error-prone, especially regarding configuration errors).

Additionally, it is advantageously possible according to the present invention that the user equipment is able to be aware of the network functions or services it is communicating with as there is a direct and authenticated communication or connection between the user equipment and those different network functions or services - especially network functions or services being able to provide different kinds of network function functionalities - instead of implicitly trusting the next hop. Allowing a zero-trust architecture provides the possibility of more decentralized and flexible deployments, e.g. deploying certain network functions or services in public clouds or in environments within less trusted environments (e.g. customer premise); this is not possible within conventionally known telecommunications networks, as with the current approach, a core network deployment, especially 5G core network deployment, assumes a trust domain, and if this is not guaranteed, a "supposedly trusted network function or service" could do whatever it wants with messages it receives and other elements, including the user equipment, will not be aware of such behavior.

It is furthermore advantageously possible according to the present invention that current non-access stratum protocols and the core network architecture is able to be reused (although other protocols, such as HTTP/2 could also be used for communication between the user equipment and the core network).

The present invention especially relates to - besides to the establishment of different non-access stratum communication links and different non-access stratum security contexts from a user equipment towards a plurality of different network functions or services - providing a solution to link (or chain) different non-access stratum communication links or non-access stratum security contexts together - or, otherwise stated, to provide for a possibility to realize a sort of connection between different non-access stratum communication links and/or non-access stratum security contexts. This is especially relevant in case of roaming: Especially in the case of roaming, specifically home-routed, the visited network (V-PLMN) and the home network (H-PLMN) need to exchange information so as to build an end-to-end (E2E) path including policies, charging, etc. to provide connectivity to the user equipment 20 while the user equipment 20 is not within its home network. With the zero-trust approach, the network functions or services of the V-PLMN are not aware of any parameters that the user equipment 20 exchanges with its home network (H-PLMN); e.g. the V-PLMN is not able to relay control plane messages to the correct network function or service (e.g. session management function) within the H-PLMN if it does not know what the user equipment 20 has actually requested.

Hence, in order for roaming to work, there is a need to share information between network functions or services in the visited network and in the home network. However, a secure communication between the user equipment and network functions or services in the home network makes it impossible for the visited network to properly fulfill its role.

As already mentioned, according to the present invention it is proposed to use multiple (or different) non-access stratum security contexts in parallel, e.g. for policy (PCF) and session management (SMF). Complementary information can be available via the different channels, such as, e.g.,:
-- a user equipment route selection policy (URSP) rule (policy-related) requiring metadata from a PDU Session (session-management-related) and/or
-- a PDU session establishment (session-management-related) requiring information related to user equipment capabilities (typically exchanged at user equipment registration, i.e. access-management-related) and/or
-- set "placeholder" Information Elements (IEs) that are not known to a NF but are known to be contained in another security context for privacy reasons.

While it is certainly possible to send the same information (or the same (control) content) via multiple NAS security contexts so that each NAS security context is self-contained, it is more efficient, secure (e.g. it allows different visibility to different network functions) and consistent (e.g. there is no possibility of conflicting, i.e. different, values being sent over different security contexts) to be able to link different non-access stratum security contexts and/or elements therein in a complementary way.

According to the present invention, the user equipment is operated using at least a first non-access stratum communication link and a second non-access stratum communication link, wherein the first non-access stratum communication link involves establishing a first non-access stratum security context between the user equipment and the first network function or service and the second non-access stratum communication link involves establishing a second non-access stratum security context between the user equipment and the second network function or service. According to the present invention, operating the user equipment, using at least the first and second non-access stratum communication links, comprises the following steps:
-- in a first step, the first non-access stratum communication link as well as the first non-access stratum security context is established using a first non-access stratum endpoint information, and the second non-access stratum communication link as well as the second non-access stratum security context is established using a second non-access stratum endpoint information, wherein the first and second endpoint information is received by the user equipment,
-- in a second step, the first and second non-access stratum communication links are used between their respective endpoints, wherein a first information element of or transmitted using the first non-access stratum security context is able to be referenced by a second information element of or transmitted using the second considered non-access stratum security context and/or wherein a first information element of or transmitted using the first non-access stratum security context is able to reference a second information element of or transmitted using the second considered non-access stratum security context.

In conventionally known telecommunications networks as well as according to the present invention, the non-access stratum communication relates to control plane information exchanged between the user equipment and the core network or network nodes of the core network, wherein such network functions or services include different network function functionalities, such as e.g., at least in case of a 5G system, an access and mobility management function (for access and mobility), a session management function (for session management), a policy and charging function (for policy information), and a location management function (for location information).

Furthermore in conventionally known telecommunications networks as well as according to the present invention, the question which one or which ones (or which instance(s)) of the different kinds of network functions or services (such as SMF, SMSF, PCF, LMF, etc.) actually serve(s) a given user equipment (that has initiated, e.g., by means of a request, the non-access stratum communication) at a given time is decided by the telecommunications network based on, or dependent on, at least one of the following: the service(s) requested by the user equipment, subscription parameters, network deployment and other parameters. The (radio) access network and/or the user equipment typically do not decide specifically which instance of a plurality of different SMF/SMSF/PCF/LMF instances (i.e. kinds of network functions or services other than the initial access and mobility management function) serves a user equipment (e.g. based on a given PDU session (protocol data unit session) establishment request of the user equipment, or a user equipment policy message, or a location-related message), whereas the (radio) access network has a saying regarding which access and mobility management function instance a user equipment network registration is routed to (although the receiving access and mobility management function instance is able to tell the (radio) access network to redirect the request to another access and mobility management function instance). The non-access stratum interface is terminated at the access and mobility management function, and as such, there is no visibility outside of the core network how non-access stratum messages are forwarded, routed, or otherwise processed.

However, in conventional telecommunications networks, the access and mobility management function serves as the one central element for the non-access stratum communication between the user equipment and the (other kinds of) network functions or services of the core network; e.g., for the session management (function) communication between the user equipment and the session management function, the access and mobility management function performs a similar - only, or at least predominantly, forwarding - functionality, as mentioned previously regarding the (radio) access network: In a manner comparable to the (radio) access network just relaying the information (of the NAS-MM communication) to the access and mobility management function (AMF), the access and mobility management function performs - in a conventional telecommunications network - a transport or a relaying of the non-access stratum message containers to and from the session management function, with the security context being terminated at the access and mobility function, typically via the service-based interface and corresponding SBI n1-n2-messages requests. However, as the security context is terminated at the access and mobility function, it is technically possible for the access and mobility function to alter and/or override messages on route to other network functions. In such a scenario (i.e. the communication between the user equipment and the session management function via the access and mobility management function), the service-based interfaces (SBI) (between the access and mobility management function and the session management function) use the HTTP/2 protocol with JSON as the application layer serialization protocol; furthermore, the protocol stack comprises - on top of the L2 layer - the IP layer, the transport control protocol (TCP) layer, the transport layer security (TLS) layer, the HTTP/2 layer and the application layer, and additionally, regarding security protection at the transport layer, all 3GPP core network functions or services support SBI; authorization is typically supported by means of OAuth2, which allows network functions or services to be authorized for given network function service(s) via the network repository function (NRF) (i.e. obtain a token providing a specific level of authorization to the API that a specific network function service exposes); however, static authorization is also possible. The same applies to all the different N1 message classes (5GMM (the whole NAS message as received (for e.g. used in forwarding the Registration message to target AMF during Registration procedure with AMF redirection)), SM (N1 Session Management message), LPP (N1 LTE Positioning Protocol message), SMS (N1 SMS message as specified in TS 23.040 and TS 24.011), UPDP (N1 messages for UE Policy Delivery (See Annex D of TS 24.501)) LCS (N1 message of Location service message type)) defined in TS 29.518. In terms of secure connectivity between elements of a core network - and as mentioned before - in the context of 5G, it is possible for HTTP/2-based interfaces (service based interfaces SBIs) to use TLS, but this relates to the connection between a pair of individual network functions or services (NFs) and not to an End-to-End (E2E) security mechanism; regarding security, when user equipment registers with the network, a non-access stratum security context is created which applies to the non-access stratum connection, i.e. between the user equipment and the access and mobility management function - hence, information sent via the access and mobility management function (e.g. towards the session management function, or towards other network functions or services) is visible to the access and mobility management function which is a drawback in case that it cannot be assured (or that it is not strived for to assure) that all components or network functions or services of a core network are part of a trusted domain; the same drawback applies to roaming with regard to the home and/or visited networks.

It is a design principle - in conventionally known telecommunications networks (e.g. in 5G core networks and prior generations of 3GPP systems) - that a core network is part of a trusted domain, i.e. the network elements within it can be trusted and security is provided on a hop-by-hop basis.

A similar approach exists - in conventionally known telecommunications networks - for roaming, whereas the inter-PLMN connection (N32 interface) can be secured, e.g. by means of TLS or PRINS: The Inter-PLMN user plane Security (IPUPS) is a Rel'16 functionality of the user plane function that enforces GTP-U security on the N9 interface between user plane functions of the visited and home PLMN; in order to realize roaming, certain network functions or services need to communicate with each other, mainly the session management functions and the policy and charging functions of the visited PLMN (V-PLMN) and home PLMH (H-PLMN), so as to establish a protocol data unit session (PDU session) connecting the user equipment and the data network (DN) via the V-PLMN; the control plane and the user plane connectivity is secured between the PLMNs (but not within) via the SEPP and IPUPS. The V-PLMN locates the appropriate network functions or services to address, within the H-PLMN (via the SEPP), either based on configuration or via the network repository function using network function or service discovery procedures.

According to the present invention, it is furthermore advantageously possible and preferred that the first non-access stratum communication link as well as the first non-access stratum security context are established using a first key information and/or a first encryption method, and wherein the second non-access stratum communication link as well as the second non-access stratum security context is established using a second key information and/or a second encryption method,
wherein especially the first key information and/or the first encryption method is different from the second key information and/or the second encryption method.

It is thereby advantageously possible to realize and implement the inventive method in a comparatively simple and efficient manner: By means of using the first and/or second key information it is advantageously possible to provide confidentiality regarding the first and/or the second non-access stratum security context such that it is advantageously possible to realize a network architecture according to the zero trust approach.

According to the present invention, it is furthermore advantageously possible and preferred that the second network function or service is a network function or service of a further telecommunications network, especially in case of a roaming situation of the user equipment being connected to, or roaming within, the further telecommunications network, wherein especially the first network function or service and the second network function or service are corresponding network functions or services, especially providing the same kind of network function functionalities, of the telecommunications network, and the further telecommunications network, respectively,
wherein especially the first non-access stratum communication link and/or the first non-access stratum security context, on the one hand, and the second non-access stratum communication link and/or the second non-access stratum security context, on the other hand, are realized in a nested manner,
wherein especially the first network function or service and the second network function or service are used in parallel by the user equipment and are non-corresponding network functions or services, providing the different kinds of network function functionalities.

It is thereby advantageously possible to realize and implement the inventive method in a comparatively simple and efficient manner, and especially also with an applicability to roaming situations.

Furthermore, it is advantageously possible and preferred according to the present invention that one of the first and second information element, if used as a piece of referencing information, referencing the other one of the first and second information element, comprises at least one out of the following:
-- a non-access stratum security context identifier information for the referenced non-access stratum communication link or the referenced non-access stratum security context, wherein the non-access stratum security context identifier information especially comprises the non-access stratum endpoint information of the referenced non-access stratum security context,
-- an information element identifier of the referenced information element,

wherein especially the first and second information element comprise information related to the same kind of network function functionalities, or related to different kinds of network function functionalities,
especially to policy and charging function functionalities and/or to session management function functionalities and/or to access and mobility management function functionalities.

It is thereby advantageously possible to efficiently reference parts or pieces of the transmitted information content of the first and/or second non-access stratum security context, i.e. it is possible that the parts or elements or information elements of the first non-access stratum security context reference parts or elements or information elements of the second non-access stratum security context or that the parts or elements or information elements of the second non-access stratum security context reference parts or elements or information elements of the first non-access stratum security context.

Furthermore, it is advantageously possible and preferred according to the present invention that in the non-access stratum communication involving the user equipment and both the first network function or service and the second network function or service, at least the first and second non-access stratum security contexts are used, especially in order to transmit user equipment route selection policy rules,
wherein especially an information element, or part thereof, is visible and/or decodable by the first network function or service or the second network function or service only in case the respective information element, or part thereof, is part of the respective non-access stratum security context.

It is thereby advantageously possible to efficiently conceal information content of the first non-access stratum security context from network nodes or network functions or services that are not part of the first non-access stratum security context (but are, possibly involved in transmitting information content of the first non-access stratum security context, e.g. by means of relaying such information), and likewise, it is advantageously possible to efficiently conceal information content of the second non-access stratum security context from network nodes or network functions or services that are not part of the second non-access stratum security context (but are, possibly involved in transmitting information content of the second non-access stratum security context, e.g. by means of relaying such information).

Furthermore, it is advantageously possible and preferred according to the present invention that the establishment of at least one of the first non-access stratum communication link and the second non-access stratum communication link involves using a user equipment bootstrapping function or service, the user equipment bootstrapping function or service either being a part of the telecommunications network or being accessible via the telecommunications network or by a network node thereof,
wherein especially the user equipment first requests the at least one of the first non-access stratum communication link and the second non-access stratum communication link to be established, wherein the user equipment bootstrapping function or service then provides a non-access stratum endpoint information regarding the at least one of the first network function or service and the second network function or service, and the non-access stratum endpoint information is used to establish the at least one of the first non-access stratum security context and the second non-access stratum security context and/or to conduct authentication of the user equipment with regard to the one of the first network function or service and the second network function or service.

It is thereby advantageously possible to realize and implement the inventive method - and especially realize, or conduct the first step of the inventive method - in a comparatively simple and efficient manner by means of the telecommunications network - especially its core network - comprising a user equipment bootstrapping function or service, or, at least, a user equipment bootstrapping function or service being accessible via the telecommunications network, especially its core network, or via a network node thereof: It is thereby advantageously possible that the (first and/or second) non-access stratum communication link - and the (first and/or second) non-access stratum security context - is established using or involving the user equipment bootstrapping function or service by means of the user equipment bootstrapping function or service providing a (first and/or second) non-access stratum endpoint information regarding the endpoint of the (first and/or second) non-access stratum communication link (and the (first and/or second) non-access stratum security context) to be established (especially, this endpoint (or these endpoints) of the (first and/or second) non-access stratum communication link(s) to be established either correspond(s) to
-- a specific network function or service (that the user equipment initially explicitly requested to be connected to), or
-- to a specified network function or service corresponding to the specific kind of network function functionality (i.e. the specific instance (typically chosen by the access network, especially by the user equipment bootstrapping function or service) of the requested kind of network function functionality)
that the user equipment initially explicitly requested to be connected to.

Using the user equipment bootstrapping function or service, it is advantageously possible according to the present invention and regarding a considered non-access stratum communication link, that as part of the first step of the inventive method, in a first sub-step, the user equipment requests the considered non-access stratum communication link to be established, the considered non-access stratum communication link involving a specific network function or service or a specific kind of network function functionality; in a second sub-step, the user equipment bootstrapping function or service provides a non-access stratum endpoint information regarding the request of the user equipment: In case that the user equipment request refers to the specific network function or service, i.e. a network function or service specifically defined by the user equipment's request, the non-access stratum endpoint information is able to be provided by the user equipment bootstrapping function or service; otherwise, in case that the user equipment only refers to a specific kind of network function functionality (i.e. not to a network function or service specifically defined by the user equipment's request) the user equipment bootstrapping function or service provides the non-access stratum endpoint information regarding a specified network function or service corresponding to the specific kind of network function functionality. In a third sub-step, the non-access stratum endpoint information is used to establish the considered non-access stratum security context and/or to conduct authentication of the user equipment with regard to either the specific network function or service, or the specified network function or service corresponding to the specific kind of network function functionality.

Furthermore, it is advantageously possible and preferred according to the present invention that, regarding information elements and/or messages sent by the user equipment towards the first network function or service or the second network function or service, the respective non-access stratum endpoint information is included in such information elements and/or messages sent by the user equipment, wherein the access network or the access network node of the telecommunications network uses the non-access stratum endpoint information to forward such information elements and/or messages to its destination, wherein such information elements and/or messages sent by the user equipment especially comprise both a source information, referring to or indicating the user equipment, and a destination information, referring to or indicating the first network function or service or the second network function or service.

It is thereby advantageously possible to realize and implement the inventive method in a comparatively simple and efficient manner.

Furthermore, it is advantageously possible and preferred according to the present invention that, regarding information elements and/or messages sent by the first network function or service or the second network function or service towards the user equipment, a non-access stratum endpoint information of the user equipment is included in such information elements and/or messages sent by the first network function or service or the second network function or service, wherein the access network or the access network node of the telecommunications network uses the non-access stratum endpoint information of the user equipment to forward such information elements and/or messages to the user equipment.

It is thereby advantageously possible according to the present invention to realize and implement the inventive method in a comparatively simple and efficient manner.

Furthermore, the present invention relates to a user equipment according to claim 9.

Furthermore, the present invention relates to a system or telecommunications network according to claim 10.

Additionally, the present invention relates to a program according to claim 11.

Additionally, the present invention relates to a computer-readable medium according to claim 12.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, such as an access and mobility management function, and other network functions or services, wherein the telecommunications network additionally comprises a user equipment bootstrapping function or service.
Figure 2 schematically illustrates the user equipment having established a plurality direct non-access stratum communication links to different network functions or services of the core network of the telecommunications network.
Figure 3 schematically illustrates a communication diagram showing a direct communication between the user equipment and the user equipment bootstrapping function or service.
Figure 4 schematically illustrates a communication diagram showing a communication between the user equipment and the user equipment bootstrapping function or service via the access and mobility management function.
Figure 5 schematically illustrates the user equipment having established two different non-access stratum communication links to two different network functions or services of the core network of the telecommunications network.
Figure 6 schematically illustrates the user equipment having established a non-access stratum communication link, respectively, to a network function or service of the core network of the telecommunications network, and to a network function or service of the core network of another telecommunications network, especially the home public land mobile network of the user equipment.
Figure 7 schematically illustrates the user equipment having established a non-access stratum communication link, respectively, to a network function or service of the core network of the telecommunications network, and to a network function or service of the core network of another telecommunications network, especially the home public land mobile network of the user equipment.
Figure 8 schematically illustrates a communication diagram showing examples of messages between the user equipment and different network functions or services of the core network of the telecommunications network and of the core network of another telecommunications network, especially the home public land mobile network of the user equipment.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

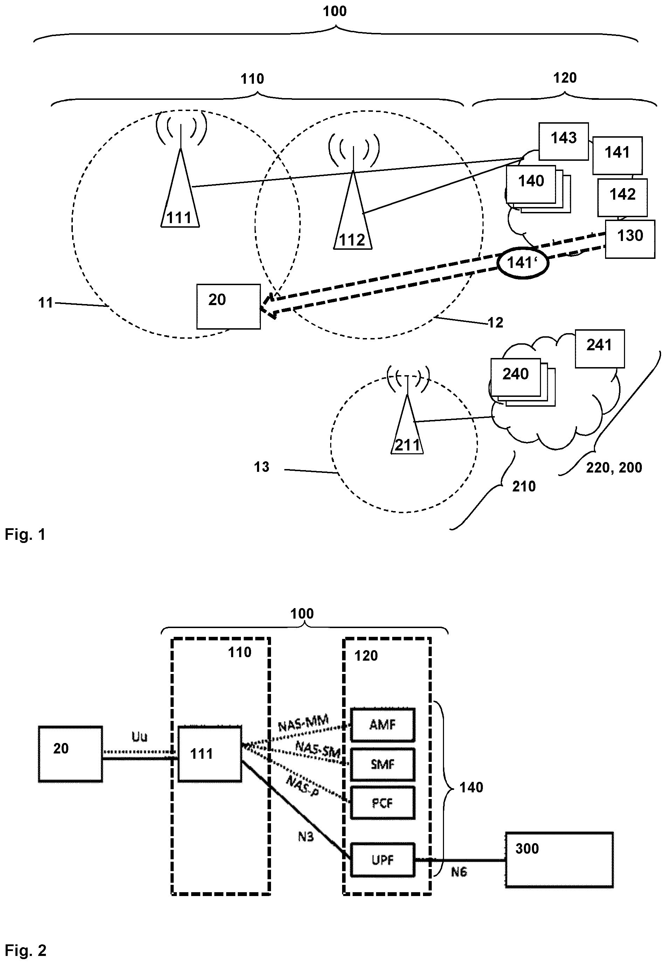

In Figure 1, a telecommunications network 100 comprising an access network 110, and a core network 120 is schematically shown. In Figure 1, the telecommunications network 100 is schematically shown as a mobile communication network 100, typically a cellular mobile communication network 100. However, the telecommunications network 100 might also be realized - at least in part - as a fixed-line telecommunications network 100 (not shown). The telecommunications network 100, especially the core network 120, typically comprises a number of network functions or services 140. Among the network functions or services 140, there might be different (kinds of) network functions or services, i.e. network functions or services providing different network function functionalities, such as, e.g., the access and mobility management function (AMF), the session management function (SMF), the policy and charging function (PCF), and the location management function (LMF). The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 is schematically shown, in Figure 1, as part of or within the radio coverage area of the first radio cell 11/first base station entity 111.

The user equipment 20 is typically, but not necessarily, mobile i.e. able to move with respect to the (typically, but not necessarily, static) radio cells 11, 12 or corresponding base station entities 111, 112 of the access network 110. In the exemplarily represented illustration of Figure 1, the core network 120 of the telecommunications network 100 comprises a first network function or service 141 (in the following also called specific network function or service 141), a further network function or service 142, and a second network function or service 143 (in the following also called further specific network function or service 143). Additionally, the core network 120 is schematically shown, in Figure 1, as comprising a user equipment bootstrapping function or service 130. According to the present invention, the user equipment bootstrapping function or service 130 is at least accessible by the user equipment 20 or by network nodes or network functions or services 140 of the core network (i.e. the user equipment bootstrapping function or service 130 being located outside of the core network 120 (e.g. as part of another network, not shown in Figure 1)), but - of course - it is also possible according to the present invention that the user equipment bootstrapping function or service 130 is part of the telecommunications network 100.

Furthermore, Figure 1 shows a further telecommunications network 200, the further telecommunications network 200 likewise being represented as a further mobile communication network 200, comprising a further access network 210 and a further core network 220, and comprising - exemplarily - a further radio cell 13 with a further base station entity 211. The further telecommunications network 200, especially the further core network 220, typically also comprises a number of further network functions or services 240. Among the further network functions or services 240, there might be different kinds of network functions or services, i.e. network functions or services providing different network function functionalities analogous to the scenario of the telecommunications network 100. In the exemplarily represented illustration of Figure 1, the further core network 220 of the further telecommunications network 200 comprises a network function or service, designated by means of reference sign 241, that is especially of the same kind (or network function functionality) as the first network function or service 141.

Figure 1 primarily shows the simple situation that the user equipment 20 is connected to its home network 100, especially its home public land mobile network, i.e. the telecommunications network 100 represented in Figure 1 corresponds to the home network of the user equipment 20. In any case, the user equipment 20 is connected using access network 120, typically a radio access network.

In case this access network 120 does not correspond to (or belong to) the home network or home public land mobile network of the user equipment 20 (i.e. in case the telecommunications network 100 is not the home network of the user equipment 20), the access network 120 to which the user equipment 20 is connected is called the visited network or visited public land mobile network of the user equipment 20; and in this case, the user equipment 20 is typically also connected to its home network, or to the core network of its home network, i.e. the network to which the subscription information in the user equipment 20 relates to. In this latter case, the telecommunications network 100 corresponds to the visited telecommunications network (or visited public land mobile network or visited network) and the further telecommunications network 200 corresponds to the home telecommunications network (or home public land mobile network or home network) of the user equipment 20.

The present invention provides a method for operating the user equipment 20 with the telecommunications network 100 and for communicating with at least two of a plurality of network functions or services 140 of the telecommunications network 100 or of the further telecommunications network 200 (i.e. either the user equipment 20 is operated with at least two of the plurality of network functions or services of the telecommunications network 100 (e.g. the first network function or service 141, and the second network function or service 143 (of the telecommunications network 100)), or the user equipment 20 is operated with at least one of the plurality of network functions or services of the telecommunications network 100 (e.g. the first network function or service 141), and at least one of a plurality of network functions or services of the further telecommunications network 200 (e.g. the second network function or service 241 (of the further telecommunications network 200))). In any case, the user equipment 20 is operated using at least a first non-access stratum communication link 21 and a second non-access stratum communication link 22, the first non-access stratum communication link 21 being established between the user equipment 20 and the first network function or service 141 of the plurality of network functions or services 140, and the second non-access stratum communication link 22 being established between the user equipment 20 and a second network function or service 143, 241 (either of the telecommunications network 100 or of the further telecommunications network 200). The first non-access stratum communication link 21 involves establishing a first non-access stratum security context between the user equipment 20 and the first network function or service 141 and the second non-access stratum communication link 22 involves establishing a second non-access stratum security context between the user equipment 20 and the second network function or service 143, 241.

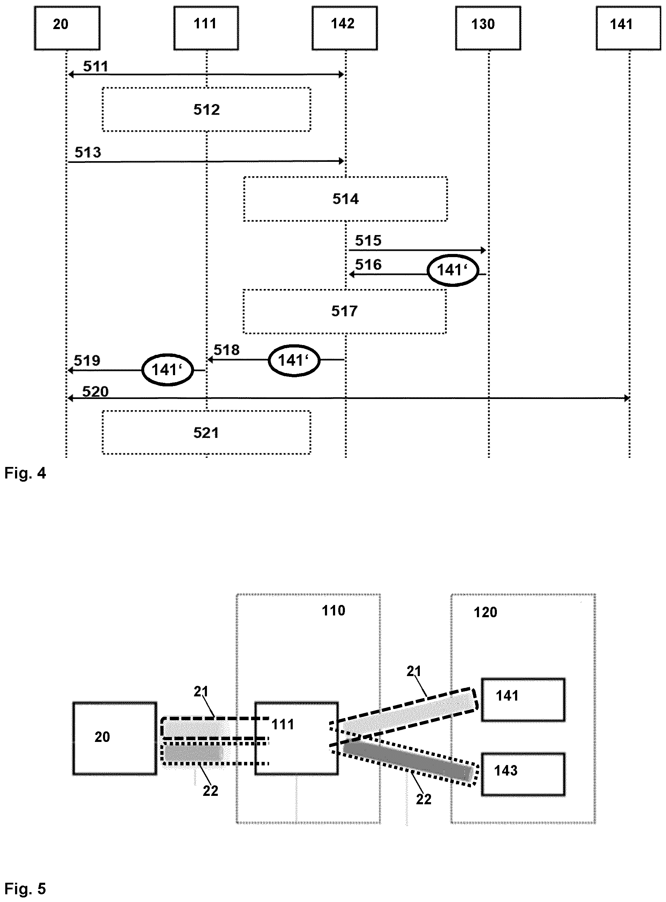

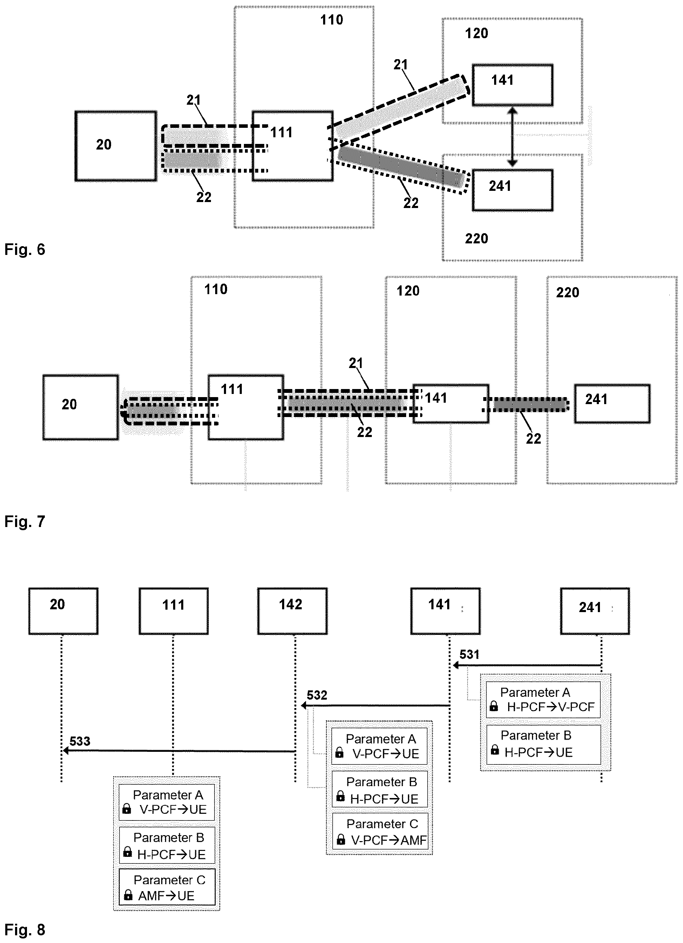

In the context of the present invention, the term second network function or service 143, 241 either refers to a scenario where the endpoints of both the first and second non-access stratum communication link 21, 22 (and, as well, the first and second non-access stratum security context) are part of (or within) the telecommunications network 100; in this scenario, the second network function or service is designated by means of reference sign 143 (cf. Figure 5). However, also a roaming scenario is addressed by the present invention; in such a roaming scenario, the endpoint of the first non-access stratum communication link 21 (and the first non-access stratum security context) is part of (or within) the telecommunications network 100, whereas the endpoint of the second non-access stratum communication link 22 (and the second non-access stratum security context) is part of (or within) the further telecommunications network 200; in this scenario, the second network function or service is designated by means of reference sign 241 (cf. Figures 6 and 7).

In a first step according to the present invention, the first non-access stratum communication link 21 as well as the first non-access stratum security context is established, especially using a first non-access stratum endpoint information; likewise, the second non-access stratum communication link 22 as well as the second non-access stratum security context is established, especially using a second non-access stratum endpoint information; for the purposes of establishing the non-access stratum communication links 21, 22, the user equipment 20 receives - especially from a user equipment bootstrapping function or service 130 - and uses the first and second endpoint information. In a second step according to the present invention, the first and second non-access stratum communication links 21, 22 (and the respective non-access stratum security contexts) are used between their respective endpoints, wherein a first information element of or transmitted using the first non-access stratum security context is able to be referenced by a second information element of or transmitted using the second considered non-access stratum security context and/or wherein a first information element of or transmitted using the first non-access stratum security context is able to reference a second information element of or transmitted using the second considered non-access stratum security context.

According to the present invention, it is preferred to involve a user equipment bootstrapping function or service 130 (especially being part of the telecommunications network 100 or, at least, accessible via the telecommunications network 100 or by a network node thereof) for establishing the non-access stratum communication links. In order to do this, it is preferred according to the present invention that, in a first sub-step (of the first step), the user equipment 20 requests the non-access stratum communication links to be established: Either the user equipment 20 requests the non-access stratum communication link(s) to be realized or established towards a first network function or service 141 i.e. not only a specific kind of network function functionality, but a specific instance thereof; alternatively, the user equipment 20 requests the non-access stratum communication link(s) to be realized or established towards a specific kind of network function functionality and leaves it to either the access network 110 or the core network 120 to decide which instance of the plurality of network functions or services of the same kind is to involve. Either way, in a second sub-step (of the first step), the user equipment bootstrapping function or service 130 provides a non-access stratum endpoint information 141' (or a plurality thereof for the at least two non-access stratum communication links) regarding the first network function or service 141 and/or regarding a specified network function or service i.e. network function or service instance corresponding to the specific kind of network function functionality, and, in a third sub-step (of the first step), the non-access stratum endpoint information 141' (or plurality of pieces of non-access stratum endpoint information) is/are used to establish the considered non-access stratum security context(s) and/or to conduct authentication of the user equipment 20 with regard to the first network function or service 141 and/or the specified network function or service corresponding to the specific kind of network function functionality.

In Figure 2, the user equipment 20 is schematically shown, having established a plurality direct non-access stratum communication links to different network functions or services 140 of the core network 120 of the telecommunications network 100. Examples of the network functions or services 140 provided or shown in Figure 2 are the access and mobility management function (AMF), the session management function (SMF), the policy and charging function (PCF). The user plane function (UPF) is also shown and also constitutes a network function or service of the plurality of network functions or services 140, but the user equipment 20 is connected to the user plane function using a user plane (UP) connection (indicated, in Figure 2, by means of a drawn-through line) using (besides the Uu interface or Uu reference point between the user equipment 20 and the base station entity 111 (or gNB or the access network 110)) the N3 interface or N3 reference point between the base station entity 111 (or gNB or the access network 110) to the user plane function, whereas the connections between the user equipment 20 and the other network functions or services 140 (besides the user plane function) correspond to non-access stratum communication links, i.e. control plane (CP) connections towards the core network (indicated, in Figure 2, by means of a dotted line): NAS-MM towards the access and mobility management function, NAS-SM towards the session management function, and NAS-P towards the policy and charging function. The user plane function connects the user equipment 20 towards a data network 300, e.g. the internet.

According to the present invention, by means of the architecture shown in Figure 2, (i.e. by means of the different direct non-access stratum communication links (or multiple non-access stratum communication links and non-access stratum security contexts) between the user equipment 20 and the different network functions or services 140) it is advantageously possible - instead of using the access and mobility management function as (especially the sole) trusted termination of the user equipment's non-access stratum security context - that the user equipment 20 maintains, transparently via the access network, a respective non-access stratum security context with multiple core network entities (i.e. different network functions or services) for different purposes, i.e. the user equipment 20 maintains multiple non-access stratum security contexts. Especially, this enables the network functions or services to be placed in different trust domains: The user equipment 20 is aware of the network functions or services it is communicating with (authenticated communication), instead of implicitly trusting the next hop. Hence, this allows for a zero-trust architecture, and accordingly more decentralized and flexible deployments, e.g. deploying certain network functions or services in public clouds or in environments within less trusted environments (e.g. customer premise); in conventionally known telecommunications networks, this would not be possible as a conventional 5G core network deployment assumes a trust domain, and, e.g., if not, a "supposedly trusted NF" could do whatever it wants with messages it receives and other elements, including the user equipment 20, will not be aware of it. According to the present invention, such an architecture is possible to be realized, especially by means of implementing bootstrapping, i.e. using the user equipment bootstrapping function or service 130: Given that the access network 110 must route control plane messages from the user equipment 20 to the core network 120, the access network needs to know to which network function or service 140 (of the core network 120) it needs to route respective control plane messages, and this especially in case that the user equipment 20 will be associated with many control plane network functions or services 140, and potentially dynamically assigned.

In order to provide for such a situation, the user equipment 20 is provided with the non-access stratum endpoints (or endpoint information), allowing the user equipment 20 to address the different network functions or services 140, and this endpoint information can then subsequently be used by the access network 110 (or base station entity 111) to route (non-access stratum) messages, hence the use of the user equipment bootstrapping function or service 130 (UBF). According to the present invention, especially two variants are considered for the user equipment bootstrapping function or service 130: The user equipment bootstrapping function or service 130 is treated as or corresponds to a non-access stratum component, or, alternatively, the user equipment bootstrapping function or service 130 is located or treated as being behind a network function or service, especially the access and mobility management function (or, interpreted otherwise, an enhanced version of the access and mobility management function might include the functionality of the user equipment bootstrapping function or service 130).

Especially according to the present invention, different key/encryption methods can be used for different NAS security contexts.

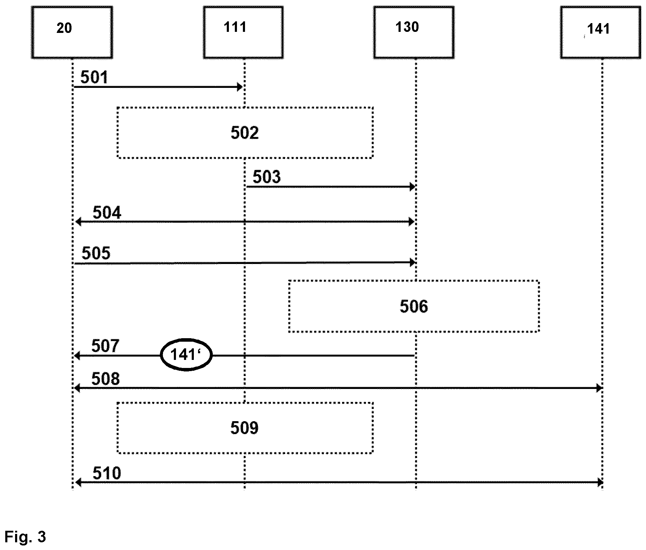

In Figure 3, a communication diagram is schematically shown between the user equipment 20, the base station entity 111, the user equipment bootstrapping function or service 130, and the access and mobility management function as the first network function or service 141, the communication diagram showing - the user equipment bootstrapping function or service 130 being a non-access stratum component - a direct communication between the user equipment 20 and the user equipment bootstrapping function or service 130, and illustrating the establishment of a (considered) non-access stratum communication link (together with a (considered) non-access stratum security context) towards the access and mobility management function as the first network function or service 141.

In a first processing step 501, an initial message (user equipment request) is sent, by the user equipment 20, towards the access network 110 (i.e. towards the base station entity 111), the initial message being directed or intended towards the user equipment bootstrapping function or service 130 (the first message especially comprising a network identifier information and a user identifier information); in a second processing step 502, the access network 110 (or base station entity 111) routes user equipment request to the user equipment bootstrapping function or service 130 (or to an instance of a user equipment bootstrapping function or service 130) based on the provided information and the configuration. In a third processing step 503, the Initial message (user equipment request) is transmitted towards the user equipment bootstrapping function or service 130 (based on the network identifier information and the user identifier information). In a fourth processing step 504, a non-access stratum security context is established or authenticated towards the user equipment bootstrapping function or service 130 (i.e. between the user equipment 20 and the user equipment bootstrapping function or service 130). In a fifth processing step 505, a non-access stratum message is sent, by the user equipment 20 towards the user equipment bootstrapping function or service 130, requesting an non-access stratum endpoint information for NAS-MM + parameters, i.e. towards the first network function or service 141 being (of the kind of) an access and mobility management function. In a sixth processing step 506, the user equipment bootstrapping function or service 130 maps the request and returns, in a seventh processing step 507, the requested non-access stratum endpoint information 141' (NAS-MM endpoint(s)) to the user equipment 20. In an eighth processing step 508, the (considered) non-access stratum security context (between the user equipment 20 and the access and mobility management function as the first network function or service 141) is established and/or authenticated, using the non-access stratum endpoint information 141', i.e. with non-access stratum endpoint for NAS-MM. In a ninth processing step 509, the access network routes the corresponding user equipment request to the first network function or service 141 based on the provided non-access stratum endpoint information 141'. In a tenth processing step 510, non-access stratum messages (in the considered case (of a access and mobility management function) NAS-MM messages) are able to be exchanged between the user equipment 20 and the first network function or service 141 directly and in a secure manner.

Hence, in case that the user equipment bootstrapping function or service 130 is or is treated as a non-access stratum component (direct communication with the user equipment 20), the user equipment bootstrapping function or service 130 is the only component required to be configured, at the access network, for bootstrapping the user equipment-non-access stratum connectivity; based on an initial bootstrapping message (first processing step 501) containing network-related information and user-related information, the access network 110/111 can route the message to the user equipment bootstrapping function or service 130 (third processing step 503) such that a non-access stratum security context can be established. From this point onwards, the access network 110 plays a transparent role in the information exchange between the user equipment 20 and the user equipment bootstrapping function or service 130 (information relay). In order to retrieve the non-access stratum endpoint (or non-access stratum endpoint information 141') including the type of non-access stratum endpoint requested (e.g. NAS-MM), the user equipment 20 queries the user equipment bootstrapping function or service 130 (processing steps 505, 506, 507). Based on the request, one or more non-access stratum endpoints or pieces of non-access stratum endpoint information are returned. With the provided endpoint (information 141'), the user equipment 20 is able to establish a non-access stratum security context. The non-access stratum endpoint contains information so that the access network can route the message towards the respective network function or service. Especially (according to different embodiments), the non-access stratum endpoint (information) 141' is or contains an IP address and/or contains information that can be mapped to an IP address (e.g. a FQDN, information that can be used to construct a well-known FQDN) and/or points to data in a configured list and/or maps to a default value (either pre-configured or well-known). After the establishment of the non-access stratum security context (cf. processing step 508), the user equipment 20 can securely communicate with the non-access stratum endpoint.

According to the present invention, any kind of (non-user plane) network function or service could be used as the first network function or service 141 instead of the access and mobility management function as the first network function or service 141 in order to establish a respective (considered) non-access stratum communication link with a (considered) non-access stratum security context, e.g., instead of the access and mobility management function: the session management function, the policy and charging function, the location management function, the short message service function.

In Figure 4, a communication diagram is schematically shown between the user equipment 20, the base station entity 111, the user equipment bootstrapping function or service 130, the session management function as the first network function or service 141, and the access and mobility management function as the further network function or service 142, the communication diagram showing - the user equipment bootstrapping function or service 130 being located or treated as being behind the further network function or service 142, especially the access and mobility management function - a communication between the user equipment 20 and the user equipment bootstrapping function or service 130 via the access and mobility management function, i.e. via the further network function or service 142, and illustrating the establishment of a (considered) non-access stratum communication link (together with a (considered) non-access stratum security context) towards the session management function as the first network function or service 141.

In a first processing step 511, the user equipment 20 registers to the network (i.e. user equipment registration occurs especially via a request in a manner according to established procedures); this comprises the establishment of a non-access stratum security context between the user equipment 20 and the access and mobility management function and involves communication between the user equipment 20 with the access and mobility management function as the further network function or service 142. In a second processing step 512, the access network 110, and especially the base station entity 111, routes the user equipment request to an access and mobility management function (i.e. an instance of potentially a plurality of access and mobility management function instances) as the further network function or service 142; this occurs based on provided information and configuration. In a third processing step 513, the user equipment 20 transmits a non-access stratum message requesting a (non-access stratum communication link) endpoint for NAS-SM communication (i.e. to either the session management function or to an instance providing session management functionality); this non-access stratum message also comprises appropriate parameters. In a fourth processing step 514, the further network function or service 142 (typically, but not necessarily an access and mobility management function) retrieves the NAS-SM related endpoint request information from the user equipment bootstrapping function or service 130, comprising requesting - in a fifth processing step 515, from the user equipment bootstrapping function or service 130 - the NAS-SM endpoint(s) or endpoint information 141', and retrieving (or receiving) - in a sixth processing step 516, from the user equipment bootstrapping function or service 130 - the NAS-SM endpoint(s) or endpoint information 141'. In a seventh processing step 517, the access and mobility management function (as the further network function or service 142) produces the NAS-SM endpoint(s), i.e. the non-access stratum endpoint information 141', to be sent to the user equipment 20 based on the information received from the user equipment bootstrapping function or service 130, and transmits this non-access stratum endpoint information 141' towards the user equipment 20, via the access network 110, i.e. the base station entity 111, cf. an eighth processing step 518, and a ninth processing step 519 in Figure 4. In a tenth processing step 520, the (considered) non-access stratum security context (between the user equipment 20 and the session management function as the first network function or service 141 is established and/or authenticated, using the non-access stratum endpoint information 141', i.e. with non-access stratum endpoint for NAS-SM. In an eleventh processing step 521, the access network routes the corresponding user equipment request to the first network function or service 141 (session management function in Figure 4)) based on the provided non-access stratum endpoint information 141'; then, non-access stratum messages (in the considered case (of an session management function) NAS-SM messages) are able to be exchanged between the user equipment 20 and the first network function or service 141 directly and in a secure manner.

Hence, in order to reduce the necessity to modify the access network functionality (or to reduce an access network impact), (e.g.) the access and mobility management function is enhanced to further include the functionality to provide non-access stratum endpoints (or non-access stratum endpoint information) to the user equipment 20. In this case, the user equipment network registration and establishment of the non-access stratum security context with the access and mobility management function (as the further network function or service) is performed based on the conventionally known procedures, and messages are routed to the access and mobility management function based on existing means. The user equipment 20 can then request the access and mobility management function (as the further network function or service 142) to provide a non-access stratum endpoint of or towards a session management function (e.g. NAS-SM to establish a PDU session). The access and mobility management function as further network function or service 142 then retrieves the non-access stratum endpoint information from the user equipment bootstrapping function or service 130 based on the information provided by the user equipment 20 (the user equipment bootstrapping function or service functionality could especially be an integral part of the access and mobility management function and based on simple means such as configuration within the access and mobility management function), and one or more non-access stratum endpoints (or pieces of endpoint information) are returned to the user equipment 20; with the provided non-access stratum endpoint, the user equipment 20 is then able to establish the (considered) non-access stratum security context with the session management function, i.e. the first network function or service 141.

In this respect, Figure 5 schematically illustrates the user equipment 20 having established two different non-access stratum communication links 21, 22, that is, in parallel, to two different network functions or services 141, 143 (first and second network functions or services) of the core network 120 of the telecommunications network 100, namely a first non-access stratum communication link 21 to the first network function or service 141, and a second non-access stratum communication link 22 to the second network function or service 143. Between the user equipment 20 and the (radio) access network 110, the non-access stratum signaling is transported via (in case of a mobile communication network) the air interface towards the base station entity 111, especially a gNB. The (radio) access network 110 forwards (transparent forwarding done by the gNB) the non-access stratum signaling but its content is encrypted. Between the (radio) access network 110 and the core network 120, parallel security contexts transport the non-access stratum signaling between the user equipment 20 and several network functions or services in the core network 120.

Figure 6 schematically illustrates another example of two parallel non-access stratum security contexts, with the user equipment 20 having established a first non-access stratum communication link 21 to a first network function or service 141 of the core network 120 of the telecommunications network 100 (e.g. as its visited network), and a second non-access stratum communication link 22 to a second network function or service 241 of the further core network 220 of the further telecommunications network 200 (e.g. as its home network). Hence, Figure 6 especially shows the case of roaming and the application of multiple security contexts 21, 22 to, e.g., the policy and charging function case: In this case, the H-PCF (second network function or service 241) can directly send information that needs to be protected via the user equipment-to-H-PCF 241 security context 22 and send the V-PCF 141 a reference that the V-PCF 141 can use to construct its messages if the information (even if the content is not known to the V-PCF) should be referenced in its communication with the user equipment 20. The double arrow between the first network function or service 141 (e.g. a policy and charging function of the visited network) and the second network function or service 241 (e.g. a policy and charging function of the home network) illustrates inter PLMN between the network functions or services for the roaming case.

Figure 7 schematically illustrates the user equipment 20 communicating with different network functions with multiple non-access stratum security contexts in a nested manner, with the user equipment 20 having established the first non-access stratum communication link 21 to the first network function or service 141 of the core network 120 of the telecommunications network 100, and the second non-access stratum communication link 22 to the second network function or service 241 of the further core network 220 of the further telecommunications network 200, especially the telecommunications network 100 corresponding to the visited network of the user equipment 20 and the further telecommunications network 200 corresponding to the home network of the user equipment 20. Figure 7 shows an example where non-access stratum communication links between the user equipment 20 and a plurality of network functions or services are chained together or nested (network function chaining by means of nesting security contexts), used, e.g., for the case of URSP rule signaling in home-routed roaming. In this case, two PCFs (i.e. the first network function or service 141 being a policy and charging function in the visited network (V-PCF), and the second network function or service 241 being a policy and charging function in the home network (H-PCF) of the user equipment 20) are required; in its simplest form, it is not possible for a forwarding entity to gain insight into the information being forwarded: The gNB or base station entity 111 in the radio access network 110 may not even be aware that there are multiple, nested non-access stratum security contexts (it nevertheless fulfills the same role of transparent forwarding as previously explained; between the radio access network 110 and the core network 120 of the visited network, the nested non-access stratum security contexts transport non-access stratum signaling between the user equipment 20 and a network function or service in the core network; the V-PCF 141 can access information from its security context but otherwise realizes transparent forwarding of the nested security content.

While the H-PCF 241 is responsible for setting URSP rules, the V-PCF 141 needs to setup the V-SMF (not shown in Figure 7) and thus indirectly QoS in the V-UPF (not shown in Figure 7) so that the agreed quality-of-service can be established. However, it may be desirable for the H-PLMN to keep some information private from the V-PLMN. However, it can be beneficial to enable different levels of visibility for the forwarding entity. To enable different levels of visibility for different elements within a transmitted piece of information, the URSP rule can be sent via current means from the H-PCF 241 to the V-PCF 141, whereas information parts the H-PLMN does not want to disclose to the V-PLMN (e.g. an application ID) are sent via the a NAS security context between the H-PCF and UE, either in parallel or nested within the NAS security context of the V-PCF 141. Hence, it is possible that an information element in one non-access stratum security context is referencing another non-access stratum security context or an information element thereof. Likewise on the interface between the H-PCF 241 and the V-PCF 141 (that might be realized using N24: V/H-PCF + H-NAS-P interfaces or protocols, or, alternatively, using N32 and SEPP interfaces or protocols), the relay functionality of the V-PCF 141 (used for forwarding communication towards the H-PCF 241, and for receiving from there) is able to access transmitted information in the N24 (or N32/SEPP) interface between H-PCF 241 and V-PCF 141 but not between H-PCF 241 and the user equipment 20, such that the user equipment 20 is able to reconstruct the full information received via the NAS security context with the V-PLMN's PCF 141 and the H-PLMN's PCF 241, information elements can be referenced between security contexts. Whereas the reference includes:
-- a non-access stratum security context identifier information for the referenced non-access stratum communication link or the referenced non-access stratum security context, wherein the non-access stratum security context identifier information especially comprises the non-access stratum endpoint information of the referenced non-access stratum security context,
-- an information element identifier of the referenced information element.

The V-PCF 141 (intermediate network function or service) relays the NAS messages between the user equipment 20 and the H-PCF 241 (final network function or service). While the intermediate network function or service 141 is aware that some information is transmitted via a second channel, it cannot access this information.

In an alternative embodiment, the H-PCF 241 is able to send a data element to a V-PCF 141 (e.g. a UE policy container) composed of information elements (IEs), e.g. NAS IEs in the case of a UE policy container, where some IEs are visible to the V-PCF 141 (e.g. securely using the security context between H-PCF 241 and V-PCF 141), whereas some other elements are not visible: either the IE content (e.g. the V-PCF 141 can be aware that a URSP rule references an application descriptor but cannot see the actual descriptor) or IE content and IE type (e.g. the V-PCF 141 can only see that some information contained in the URSP rule is encrypted). Preferably and advantageously, cryptographic methods (e.g. signing) is applied to ensure that non-encrypted IEs are not modified by the V-PCF 141; in such a case, a data element (e.g. the mentioned URSP rule) received by the user equipment 20 is able to contain or comprise information from two security contexts, i.e. the IEs being verifiably originating from the V-PCF 141 and/or from the H-PCF 241. Such a scenario is schematically shown in Figure 8, which shows a communication diagram between the user equipment 20, the base station entity 111, the further network function or service 142 (for example an access and mobility management function, AMF), the visited policy and charging function V-PCF as the first network function or service 141, and the home policy and charging function H-PCF as the second network function or service 241, the communication diagram showing examples of messages: a first message (in a first processing step 531) from the H-PCF 241 to the V-PCF 141, a second message (in a second processing step 532) from the V-PCF 141 to the AMF 142, a third message (in a third processing step 533) from the AMF 142 to the user equipment 20. The first message comprises a Parameter A (or information element A) transported in a non-access stratum security context from H-PCF 241 to V-PCF 141, and a Parameter B (or information element B) transported in a non-access stratum security context from H-PCF 241 to the user equipment 20. The second message comprises a Parameter A (or information element A) transported in a non-access stratum security context from V-PCF 141 to the user equipment 20, a Parameter B (or information element B) transported in a non-access stratum security context from H-PCF 241 to the user equipment 20, and a Parameter C (or information element C) transported in a non-access stratum security context from V-PCF 141 to AMF 142. The third message comprises a Parameter A (or information element A) transported in a non-access stratum security context from V-PCF 141 to the user equipment 20, a Parameter B (or information element B) transported in a non-access stratum security context from H-PCF 241 to the user equipment 20, and a Parameter C (or information element C) transported in a non-access stratum security context from AMF 142 to the user equipment 20. Hence, a given parameter can be sent so that an intermediary recipient can be aware of it (if this is desired) and, also, that an information is able to be concealed from an intermediary recipient (if this is desired). According to the present invention, especially both embodiments or approaches are preferably combined for sending non-access stratum Information Elements (IEs):
-- via multiple non-access stratum security contexts, i.e. in an authenticated, secure and integrity-protected way,
-- through multiple forwarding entities, and/or
-- allowing granular control over what entity/entities can see, add, remove and/or change values in the non-access stratum signaling chain, and/or
-- without the need to replicate data that needs to be used by entities communicating via different non-access stratum security contexts.

## Claims

1. Method for operating a user equipment (20) with a telecommunications network (100) and for communicating with at least two of a plurality of network functions or services (140) of the telecommunications network (100) or of a further telecommunications network (200), wherein the user equipment (20) is operated using at least a first non-access stratum communication link (21) and a second non-access stratum communication link (22), the first non-access stratum communication link (21) being established between the user equipment (20) and a first network function or service (141) of the plurality of network functions or services (140), and the second non-access stratum communication link (22) being established between the user equipment (20) and a second network function or service (143, 241), wherein the first non-access stratum communication link (21) involves establishing a first non-access stratum security context between the user equipment (20) and the first network function or service (141) and the second non-access stratum communication link (22) involves establishing a second non-access stratum security context between the user equipment (20) and the second network function or service (143, 241),
wherein the operation of the user equipment (20), using at least the first and second non-access stratum communication links (21, 22), comprises the following steps:
-- in a first step, the first non-access stratum communication link (21) as well as the first non-access stratum security context is established using a first non-access stratum endpoint information regarding the first network function or service (141), and the second non-access stratum communication link (22) as well as the second non-access stratum security context is established using a second non-access stratum endpoint information regarding the second network function or service (143, 241), wherein the first and second endpoint information is received by the user equipment (20),
-- in a second step, the first and second non-access stratum communication links (21, 22) are used between their respective endpoints, wherein a first information element of or transmitted using the first non-access stratum security context is able to be referenced by a second information element of or transmitted using the second non-access stratum security context and/or wherein a first information element of or transmitted using the first non-access stratum security context is able to reference a second information element of or transmitted using the second non-access stratum security context, wherein one of the first and second information element, if used as a piece of referencing information, referencing the other one of the first and second information element, comprises at least one out of the following:
-- a non-access stratum security context identifier information for the referenced non-access stratum communication link or the referenced non-access stratum security context,
-- an information element identifier of the referenced information element.

2. Method according to claim 1, wherein the first non-access stratum communication link (21) as well as the first non-access stratum security context are established using a first key information and/or a first encryption method, and wherein the second non-access stratum communication link (22) as well as the second non-access stratum security context is established using a second key information and/or a second encryption method,
wherein especially the first key information and/or the first encryption method is different from the second key information and/or the second encryption method.

3. Method according to one of the preceding claims, wherein the second network function or service (143, 241) is a network function or service of a further telecommunications network (200), especially in case of a roaming situation of the user equipment (20) being connected to, or roaming within, the further telecommunications network (200),
wherein especially the first network function or service (141) and the second network function or service (143, 241) are corresponding network functions or services, especially providing the same kind of network function functionalities, of the telecommunications network (100), and the further telecommunications network (200), respectively,
wherein especially the first non-access stratum communication link (21) and/or the first non-access stratum security context, on the one hand, and the second non-access stratum communication link (22) and/or the second non-access stratum security context, on the other hand, are realized in a nested manner, wherein especially the first network function or service (141) and the second network function or service (143, 241) are used in parallel by the user equipment (20) and are non-corresponding network functions or services, providing the different kinds of network function functionalities.

4. Method according to one of the preceding claims, wherein the non-access stratum security context identifier information comprises the non-access stratum endpoint information of the referenced non-access stratum security context.

5. Method according to one of the preceding claims, wherein in the non-access stratum communication involving the user equipment (20) and both the first network function or service (141) and the second network function or service (143, 241), at least the first and second non-access stratum security contexts are used, especially in order to transmit user equipment route selection policy rules,
wherein especially an information element, or part thereof, is visible and/or decodable by the first network function or service (141) or the second network function or service (143, 241) only in case the respective information element, or part thereof, is part of the respective non-access stratum security context.

6. Method according to one of the preceding claims, wherein the establishment of at least one of the first non-access stratum communication link and the second non-access stratum communication link involves using a user equipment bootstrapping function or service (130), the user equipment bootstrapping function or service (130) either being a part of the telecommunications network (100) or being accessible via the telecommunications network (100) or by a network node thereof,
wherein especially the user equipment (20) first requests the at least one of the first non-access stratum communication link and the second non-access stratum communication link to be established, wherein the user equipment bootstrapping function or service (130) then provides a non-access stratum endpoint information (141') regarding the at least one of the first network function or service (141) and the second network function or service (143, 241), and the non-access stratum endpoint information (141') is used to establish the at least one of the first non-access stratum security context and the second non-access stratum security context and/or to conduct authentication of the user equipment (20) with regard to the one of the first network function or service (141) and the second network function or service (143, 241).

7. Method according to one of the preceding claims, wherein, regarding information elements and/or messages sent by the user equipment (20) towards the first network function or service (141) or the second network function or service (143, 241), the respective non-access stratum endpoint information (141') is included in such information elements and/or messages sent by the user equipment (20), wherein the access network (110) or the access network node (111) of the telecommunications network (100) uses the non-access stratum endpoint information (141') to forward such information elements and/or messages to its destination, wherein such information elements and/or messages sent by the user equipment (20) especially comprise both a source information, referring to or indicating the user equipment (20), and a destination information, referring to or indicating the first network function or service (141) or the second network function or service (143, 241).

8. Method according to one of the preceding claims, wherein, regarding information elements and/or messages sent by the first network function or service (141) or the second network function or service (143, 241) towards the user equipment (20), a non-access stratum endpoint information of the user equipment (20) is included in such information elements and/or messages sent by the first network function or service (141) or the second network function or service (143, 241), wherein the access network (110) or the access network node (111) of the telecommunications network (100) uses the non-access stratum endpoint information of the user equipment (20) to forward such information elements and/or messages to the user equipment (20).

9. User equipment (20) for being operated with a telecommunications network (100) and for communicating with at least two of a plurality of network functions or services (140) of the telecommunications network (100) or of a further telecommunications network (200), wherein the user equipment (20) is configured to use at least a first non-access stratum communication link (21) and a second non-access stratum communication link (22), the first non-access stratum communication link (21) being established between the user equipment (20) and a first network function or service (141) of the plurality of network functions or services (140), and the second non-access stratum communication link (22) being established between the user equipment (20) and a second network function or service (143, 241), wherein the first non-access stratum communication link (21) involves establishing a first non-access stratum security context between the user equipment (20) and the first network function or service (141) and the second non-access stratum communication link (22) involves establishing a second non-access stratum security context between the user equipment (20) and the second network function or service (143, 241),
wherein the user equipment (20), using at least the first and second non-access stratum communication links (21, 22), is configured such that:
-- the first non-access stratum communication link (21) as well as the first non-access stratum security context is established using a first non-access stratum endpoint information regarding the first network function or service (141), and the second non-access stratum communication link (22) as well as the second non-access stratum security context is established using a second non-access stratum endpoint information regarding the second network function or service (143, 241), wherein the user equipment (20) receives the first and second endpoint information, especially from the telecommunications network (100),
-- the first and second non-access stratum communication links (21, 22) are used between their respective endpoints, wherein a first information element of or transmitted using the first non-access stratum security context is able to be referenced by a second information element of or transmitted using the second non-access stratum security context and/or wherein a first information element of or transmitted using the first non-access stratum security context is able to reference a second information element of or transmitted using the second non-access stratum security context wherein one of the first and second information element, if used as a piece of referencing information, referencing the other one of the first and second information element, comprises at least one out of the following:
-- a non-access stratum security context identifier information for the referenced non-access stratum communication link or the referenced non-access stratum security context,
-- an information element identifier of the referenced information element.

10. System or telecommunications network (100) for operating a user equipment (20) with the telecommunications network (100) and for providing at least two of a plurality of network functions or services (140), the plurality of network functions or services (140) being able to provide different kinds of network function functionalities, wherein the user equipment (20) is operated using at least a first non-access stratum communication link (21) and a second non-access stratum communication link (22), the first non-access stratum communication link (21) being established between the user equipment (20) and a first network function or service (141) of the plurality of network functions or services (140), and the second non-access stratum communication link (22) being established between the user equipment (20) and a second network function or service (143, 241), wherein the first non-access stratum communication link (21) involves establishing a first non-access stratum security context between the user equipment (20) and the first network function or service (141) and the second non-access stratum communication link (22) involves establishing a second non-access stratum security context between the user equipment (20) and the second network function or service (143, 241),
wherein the system or telecommunications network (100) is configured such that:
-- the first non-access stratum communication link (21) as well as the first non-access stratum security context is established using a first non-access stratum endpoint information regarding the first network function or service (141), and the second non-access stratum communication link (22) as well as the second non-access stratum security context is established using a second non-access stratum endpoint information regarding the second network function or service (143, 241), wherein the first and second endpoint information is transmitted, by the telecommunications network (100), to the user equipment (20),
-- the first and second non-access stratum communication links (21, 22) are used between their respective endpoints, wherein a first information element of or transmitted using the first non-access stratum security context is able to be referenced by a second information element of or transmitted using the second non-access stratum security context and/or wherein a first information element of or transmitted using the first non-access stratum security context is able to reference a second information element of or transmitted using the second non-access stratum security context wherein one of the first and second information element, if used as a piece of referencing information, referencing the other one of the first and second information element, comprises at least one out of the following:
-- a non-access stratum security context identifier information for the referenced non-access stratum communication link or the referenced non-access stratum security context,
-- an information element identifier of the referenced information element.

11. Program comprising a computer readable program code which, when executed on a user equipment (20) and/or on a network function or service (140) of a telecommunications network (100), causes the user equipment (20) and/or the network function or service (140) of the telecommunications network (100) to perform a method according one of claims 1 to 8.

12. Computer-readable medium comprising instructions which when executed on a user equipment (20) and/or on a network function or service (140) of a telecommunications network (100), causes the user equipment (20) and/or the network function or service (140) of the telecommunications network (100) to perform a method according one of claims 1 to 8.

## Patentansprüche

1. Verfahren zum Betreiben einer Benutzerausrüstung (20) mit einem Telekommunikationsnetz (100) und zum Kommunizieren mit mindestens zwei von mehreren Netzfunktionen oder Netzdiensten (140) des Telekommunikationsnetzes (100) oder eines weiteren Telekommunikationsnetzes (200), wobei die Benutzerausrüstung (20) unter Verwendung mindestens einer ersten Nichtzugangsschicht-Kommunikationsverbindung (21) und einer zweiten Nichtzugangsschicht-Kommunikationsverbindung (22) betrieben wird, wobei die erste Nichtzugangsschicht-Kommunikationsverbindung (21) zwischen der Benutzerausrüstung (20) und einer ersten Netzfunktion oder einem ersten Netzdienst (141) der mehreren Netzfunktionen oder Netzdienste (140) hergestellt wird, und die zweite Nichtzugangsschicht-Kommunikationsverbindung (22) zwischen der Benutzerausrüstung (20) und einer zweiten Netzfunktion oder einem zweiten Netzdienst (143, 241) hergestellt wird, wobei die erste Nichtzugangsschicht-Kommunikationsverbindung (21) das Herstellen eines ersten Nichtzugangsschicht-Sicherheitskontextes zwischen der Benutzerausrüstung (20) und der ersten Netzfunktion oder dem ersten Netzdienst (141) umfasst und die zweite Nichtzugangsschicht-Kommunikationsverbindung (22) das Herstellen eines zweiten Nichtzugangsschicht-Sicherheitskontextes zwischen der Benutzerausrüstung (20) und der zweiten Netzfunktion oder dem zweiten Netzdienst (143, 241) umfasst,
wobei der Betrieb der Benutzerausrüstung (20) unter Verwendung mindestens der ersten und der zweiten Nichtzugangsschicht-Kommunikationsverbindung (21, 22) die folgenden Schritte umfasst:
- in einem ersten Schritt werden die erste Nichtzugangsschicht-Kommunikationsverbindung (21) sowie der erste Nichtzugangsschicht-Sicherheitskontext unter Verwendung einer ersten Nichtzugangsschicht-Endpunktinformation bezüglich der ersten Netzfunktion oder des ersten Netzdienstes (141) eingerichtet, und die zweite Nichtzugangsschicht-Kommunikationsverbindung (22) sowie der zweite Nichtzugangsschicht-Sicherheitskontext werden unter Verwendung einer zweiten Nichtzugangsschicht-Endpunktinformation bezüglich der zweiten Netzfunktion oder des zweiten Netzdienstes (143, 241) eingerichtet, wobei die erste und die zweite Endpunktinformation durch die Benutzerausrüstung (20) empfangen werden,
- in einem zweiten Schritt werden die erste und die zweite Nichtzugangsschicht-Kommunikationsverbindung (21, 22) zwischen ihren jeweiligen Endpunkten verwendet, wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, durch ein zweites Informationselement, das Teil des zweiten Nichtzugangsschicht-Sicherheitskontextes ist oder unter Verwendung des zweiten Nichtzugangsschicht-Sicherheitskontextes gesendet wird, referenziert zu werden, und/oder wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, ein zweites Informationselement, das Teil des zweiten Nichtzugangsschicht-Sicherheitskontextes ist oder unter Verwendung des zweiten Nichtzugangsschicht-Sicherheitskontextes gesendet wird, zu referenzieren, wobei eines des ersten und des zweiten Informationselements, falls es als ein Referenzierungsinformationsteil verwendet wird, die das andere des ersten und des zweiten Informationselements referenziert, mindestens eines von Folgendem umfasst:
- eine Nichtzugangsschicht-Sicherheitskontext-Kennungsinformation für die referenzierte Nichtzugangsschicht-Kommunikationsverbindung oder den referenzierten Nichtzugangsschicht-Sicherheitskontext,
- eine Informationselement-Kennung des referenzierten Informationselements.

2. Verfahren nach Anspruch 1, wobei die erste Nichtzugangsschicht-Kommunikationsverbindung (21) sowie der erste Nichtzugangsschicht-Sicherheitskontext unter Verwendung einer ersten Schlüsselinformation und/oder eines ersten Verschlüsselungsverfahrens hergestellt werden, und wobei die zweite Nichtzugangsschicht-Kommunikationsverbindung (22) sowie der zweite Nichtzugangsschicht-Sicherheitskontext unter Verwendung einer zweiten Schlüsselinformation und/oder eines zweiten Verschlüsselungsverfahrens hergestellt werden,
wobei sich insbesondere die erste Schlüsselinformation und/oder das erste Verschlüsselungsverfahren von der zweiten Schlüsselinformation und/oder dem zweiten Verschlüsselungsverfahren unterscheiden.

3. Verfahren nach einem der vorangehenden Ansprüche, wobei die zweite Netzfunktion oder der zweite Netzdienst (143, 241) eine Netzfunktion oder ein Netzdienst eines weiteren Telekommunikationsnetzes (200) ist, insbesondere im Fall einer Roaming-Situation, in der die Benutzerausrüstung (20) mit dem weiteren Telekommunikationsnetz (200) verbunden ist oder innerhalb des weiteren Telekommunikationsnetzes (200) roamt,
wobei insbesondere die erste Netzfunktion oder der erste Netzdienst (141) und die zweite Netzfunktion oder der zweite Netzdienst (143, 241) entsprechende Netzfunktionen oder Netzdienste, die insbesondere die gleiche Art von Netzfunktionsfunktionalitäten bereitstellen, des Telekommunikationsnetzes (100) bzw. des weiteren Telekommunikationsnetzes (200) sind,
wobei insbesondere die erste Nichtzugangsschicht-Kommunikationsverbindung (21) und/oder der erste Nichtzugangsschicht-Sicherheitskontext einerseits und die zweite Nichtzugangsschicht-Kommunikationsverbindung (22) und/oder der zweite Nichtzugangsschicht-Sicherheitskontext andererseits in einer verschachtelten Weise realisiert sind,
wobei insbesondere die erste Netzfunktion oder der erste Netzdienst (141) und die zweite Netzfunktion oder der zweite Netzdienst (143, 241) parallel durch die Benutzerausrüstung (20) verwendet werden und nichtentsprechende Netzfunktionen oder Netzdienste sind, die die verschiedenen Arten von Netzfunktionsfunktionalitäten bereitstellen.

4. Verfahren nach einem der vorangehenden Ansprüche, wobei die Nichtzugangsschicht-Sicherheitskontext-Kennungsinformation die Nichtzugangsschicht-Endpunktinformation des referenzierten Nichtzugangsschicht-Sicherheitskontextes umfasst.

5. Verfahren nach einem der vorangehenden Ansprüche, wobei in der Nichtzugangsschicht-Kommunikation, an der die Benutzerausrüstung (20) und sowohl die erste Netzfunktion oder den ersten Netzdienst (141) als auch die zweite Netzfunktion oder den zweiten Netzdienst (143, 241) beteiligt sind, mindestens der erste und der zweite Nichtzugangsschicht-Sicherheitskontext verwendet werden, insbesondere, um Benutzerausrüstungs-Routenwahlvorschrift-Regeln zu senden,
wobei insbesondere ein Informationselement, oder ein Teil davon, durch die erste Netzfunktion oder den ersten Netzdienst (141) oder die zweite Netzfunktion oder den zweiten Netzdienst (143, 241) nur dann sichtbar und/oder decodierbar ist, falls das jeweilige Informationselement, oder ein Teil davon, Teil des jeweiligen Nichtzugangsschicht-Sicherheitskontextes ist.

6. Verfahren nach einem der vorangehenden Ansprüche, wobei die Herstellung mindestens einer der ersten Nichtzugangsschicht-Kommunikationsverbindung und der zweiten Nichtzugangsschicht-Kommunikationsverbindung die Verwendung einer Benutzerausrüstungs-Bootstrapping-Funktion oder eines Benutzerausrüstungs-Bootstrapping-Dienstes (130) umfasst, wobei die Benutzerausrüstungs-Bootstrapping-Funktion oder der Benutzerausrüstungs-Bootstrapping-Dienst (130) entweder ein Teil des Telekommunikationsnetzes (100) ist oder über das Telekommunikationsnetz (100) oder durch einen Netzknoten desselben zugänglich ist,
wobei insbesondere die Benutzerausrüstung (20) zuerst anfordert, dass die mindestens eine der ersten Nichtzugangsschicht-Kommunikationsverbindung und der zweiten Nichtzugangsschicht-Kommunikationsverbindung hergestellt wird, wobei die Benutzerausrüstungs-Bootstrapping-Funktion oder der Benutzerausrüstungs-Bootstrapping-Dienst (130) dann eine Nichtzugangsschicht-Endpunktinformation (141') in Bezug auf das mindestens eine der ersten Netzfunktion oder des ersten Netzdienstes (141) und der zweiten Netzfunktion oder des zweiten Netzdienstes (143, 241) bereitstellt, und die Nichtzugangsschicht-Endpunktinformation (141') verwendet wird, um den mindestens einen des ersten Nichtzugangsschicht-Sicherheitskontextes und des zweiten Nichtzugangsschicht-Sicherheitskontextes herzustellen und/oder eine Authentifizierung der Benutzerausrüstung (20) in Bezug auf das mindestens eine der ersten Netzfunktion oder des ersten Netzdienstes (141) und der zweiten Netzfunktion oder des zweiten Netzdienstes (143, 241) durchzuführen.

7. Verfahren nach einem der vorangehenden Ansprüche, wobei in Bezug auf Informationselemente und/oder -nachrichten, die durch die Benutzerausrüstung (20) in Richtung der ersten Netzfunktion oder des ersten Netzdienstes (141) oder der zweiten Netzfunktion oder des zweiten Netzdienstes (143, 241) gesendet werden, die jeweilige Nichtzugangsschicht-Endpunktinformation (141') in solchen durch die Benutzerausrüstung (20) gesendeten Informationselementen und/oder -nachrichten enthalten ist, wobei das Zugangsnetz (110) oder der Zugangsnetzknoten (111) des Telekommunikationsnetzes (100) die Nichtzugangsschicht-Endpunktinformation (141') verwendet, um solche Informationselemente und/oder -nachrichten an ihren Zielort weiterzuleiten, wobei solche durch die Benutzerausrüstung (20) gesendeten Informationselemente und/oder -nachrichten insbesondere sowohl eine Quelleninformation, die sich auf die Benutzerausrüstung (20) bezieht oder diese angibt, als auch eine Zielortinformation, die auf die erste Netzfunktion oder den ersten Netzdienst (141) oder die zweite Netzfunktion oder den zweiten Netzdienst (143, 241) verweist oder diese angibt, umfassen.

8. Verfahren nach einem der vorangehenden Ansprüche, wobei in Bezug auf Informationselemente und/oder -nachrichten, die durch die ersten Netzfunktion oder den ersten Netzdienst (141) oder die zweite Netzfunktion oder den zweiten Netzdienst (143, 241) in Richtung der Benutzerausrüstung (20) gesendet werden, eine Nichtzugangsschicht-Endpunktinformation der Benutzerausrüstung (20) in solchen Informationselementen und/oder -nachrichten, die durch die erste Netzfunktion oder den ersten Netzdienst (141) oder die zweite Netzfunktion oder den zweiten Netzdienst (143, 241) gesendet werden, enthalten ist, wobei das Zugangsnetz (110) oder der Zugangsnetzknoten (111) des Telekommunikationsnetzes (100) die Nichtzugangsschicht-Endpunktinformation der Benutzerausrüstung (20) verwendet, um solche Informationselemente und/oder -nachrichten an die Benutzerausrüstung (20) weiterzuleiten.

9. Benutzerausrüstung (20) für den Betrieb mit einem Telekommunikationsnetz (100) und zum Kommunizieren mit mindestens zwei von mehreren Netzfunktionen oder Netzdiensten (140) des Telekommunikationsnetzes (100) oder eines weiteren Telekommunikationsnetzes (200), wobei die Benutzerausrüstung (20) dazu eingerichtet ist, mindestens eine erste Nichtzugangsschicht-Kommunikationsverbindung (21) und eine zweite Nichtzugangsschicht-Kommunikationsverbindung (22) zu verwenden, wobei die erste Nichtzugangsschicht-Kommunikationsverbindung (21) zwischen der Benutzerausrüstung (20) und einer ersten Netzfunktion oder einem ersten Netzdienst (141) der mehreren Netzfunktionen oder Netzdienste (140) hergestellt ist, und die zweite Nichtzugangsschicht-Kommunikationsverbindung (22) zwischen der Benutzerausrüstung (20) und einer zweiten Netzfunktion oder einem zweiten Netzdienst (143, 241) hergestellt ist, wobei die erste Nichtzugangsschicht-Kommunikationsverbindung (21) das Herstellen eines ersten Nichtzugangsschicht-Sicherheitskontextes zwischen der Benutzerausrüstung (20) und der ersten Netzfunktion oder dem ersten Netzdienst (141) umfasst und die zweite Nichtzugangsschicht-Kommunikationsverbindung (22) das Herstellen eines zweiten Nichtzugangsschicht-Sicherheitskontextes zwischen der Benutzerausrüstung (20) und der zweiten Netzfunktion oder dem zweiten Netzdienst (143, 241) umfasst,
wobei die Benutzerausrüstung (20), die mindestens die erste und die zweite Nichtzugangsschicht-Kommunikationsverbindung (21, 22) verwendet, so eingerichtet ist, dass:
- die erste Nichtzugangsschicht-Kommunikationsverbindung (21) sowie der erste Nichtzugangsschicht-Sicherheitskontext unter Verwendung einer ersten Nichtzugangsschicht-Endpunktinformation bezüglich der ersten Netzfunktion oder des ersten Netzdienstes (141) eingerichtet sind, und die zweite Nichtzugangsschicht-Kommunikationsverbindung (22) sowie der zweite Nichtzugangsschicht-Sicherheitskontext unter Verwendung einer zweiten Nichtzugangsschicht-Endpunktinformation bezüglich der zweiten Netzfunktion oder des zweiten Netzdienstes (143, 241) eingerichtet sind, wobei die Benutzerausrüstung (20) die erste und die zweite Endpunktinformation, insbesondere vom Telekommunikationsnetz (100), empfängt,
- die erste und die zweite Nichtzugangsschicht-Kommunikationsverbindung (21, 22) zwischen ihren jeweiligen Endpunkten verwendet werden, wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, durch ein zweites Informationselement, das Teil des zweiten Nichtzugangsschicht-Sicherheitskontextes ist oder unter Verwendung des zweiten Nichtzugangsschicht-Sicherheitskontextes gesendet wird, referenziert zu werden, und/oder wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, ein zweites Informationselement, das Teil des zweiten Nichtzugangsschicht-Sicherheitskontextes ist oder unter Verwendung des zweiten Nichtzugangsschicht-Sicherheitskontextes gesendet wird, zu referenzieren, wobei eines des ersten und des zweiten Informationselements, falls es als ein Referenzierungsinformationsteil verwendet wird, die das andere des ersten und des zweiten Informationselements referenziert, mindestens eines von Folgendem umfasst:
- eine Nichtzugangsschicht-Sicherheitskontext-Kennungsinformation für die referenzierte Nichtzugangsschicht-Kommunikationsverbindung oder den referenzierten Nichtzugangsschicht-Sicherheitskontext,
- eine Informationselement-Kennung des referenzierten Informationselements.

10. System oder Telekommunikationsnetz (100) zum Betreiben einer Benutzerausrüstung (20) mit dem Telekommunikationsnetz (100) und zum Bereitstellen von mindestens zwei von mehreren Netzfunktionen oder Netzdiensten (140), wobei die mehreren Netzfunktionen oder Netzdienste (140) in der Lage sind, verschiedene Arten von Netzfunktionsfunktionalitäten bereitzustellen, wobei die Benutzerausrüstung (20) unter Verwendung mindestens einer ersten Nichtzugangsschicht-Kommunikationsverbindung (21) und einer zweiten Nichtzugangsschicht-Kommunikationsverbindung (22) betrieben ist, wobei die erste Nichtzugangsschicht-Kommunikationsverbindung (21) zwischen der Benutzerausrüstung (20) und einer ersten Netzfunktion oder einem ersten Netzdienst (141) der mehreren Netzfunktionen oder Netzdienste (140) hergestellt ist, und die zweite Nichtzugangsschicht-Kommunikationsverbindung (22) zwischen der Benutzerausrüstung (20) und einer zweiten Netzfunktion oder einem zweiten Netzdienst (143, 241) hergestellt ist, wobei die erste Nichtzugangsschicht-Kommunikationsverbindung (21) das Herstellen eines ersten Nichtzugangsschicht-Sicherheitskontextes zwischen der Benutzerausrüstung (20) und der ersten Netzfunktion oder dem ersten Netzdienst (141) umfasst und die zweite Nichtzugangsschicht-Kommunikationsverbindung (22) das Herstellen eines zweiten Nichtzugangsschicht-Sicherheitskontextes zwischen der Benutzerausrüstung (20) und der zweiten Netzfunktion oder dem zweiten Netzdienst (143, 241) umfasst,
wobei das System oder Telekommunikationsnetz (100) so eingerichtet ist, dass:
- die erste Nichtzugangsschicht-Kommunikationsverbindung (21) sowie der erste Nichtzugangsschicht-Sicherheitskontext unter Verwendung einer ersten Nichtzugangsschicht-Endpunktinformation bezüglich der ersten Netzfunktion oder des ersten Netzdienstes (141) eingerichtet sind, und die zweite Nichtzugangsschicht-Kommunikationsverbindung (22) sowie der zweite Nichtzugangsschicht-Sicherheitskontext unter Verwendung einer zweiten Nichtzugangsschicht-Endpunktinformation bezüglich der zweiten Netzfunktion oder des zweiten Netzdienstes (143, 241) eingerichtet sind, wobei die erste und die zweite Endpunktinformation, durch das Telekommunikationsnetz (100), an die Benutzerausrüstung (20) gesendet werden,
- die erste und die zweite Nichtzugangsschicht-Kommunikationsverbindung (21, 22) zwischen ihren jeweiligen Endpunkten verwendet werden, wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, durch ein zweites Informationselement, das Teil des zweiten Nichtzugangsschicht-Sicherheitskontextes ist oder unter Verwendung des zweiten Nichtzugangsschicht-Sicherheitskontextes gesendet wird, referenziert zu werden, und/oder wobei ein erstes Informationselement, das Teil des ersten Nichtzugangsschicht-Sicherheitskontextes ist oder unter Verwendung des ersten Nichtzugangsschicht-Sicherheitskontextes gesendet wird, in der Lage ist, ein zweites Informationselement, das Teil des zweiten Nichtzugangsschicht-Sicherheitskontextes ist oder unter Verwendung des zweiten Nichtzugangsschicht-Sicherheitskontextes gesendet wird, zu referenzieren, wobei eines des ersten und des zweiten Informationselements, falls es als ein Referenzierungsinformationsteil verwendet wird, die das andere des ersten und des zweiten Informationselements referenziert, mindestens eines von Folgendem umfasst:
- eine Nichtzugangsschicht-Sicherheitskontext-Kennungsinformation für die referenzierte Nichtzugangsschicht-Kommunikationsverbindung oder den referenzierten Nichtzugangsschicht-Sicherheitskontext,
- eine Informationselement-Kennung des referenzierten Informationselements.

11. Programm, umfassend einen computerlesbaren Programmcode, der, wenn er in einer Benutzerausrüstung (20) und/oder in einer Netzfunktion oder einem Netzdienst (140) eines Telekommunikationsnetzes (100) ausgeführt wird, die Benutzerausrüstung (20) und/oder die Netzfunktion oder den Netzdienst (140) des Telekommunikationsnetzes (100) veranlasst, ein Verfahren nach einem der Ansprüche 1 bis 8 durchzuführen.

12. Computerlesbares Medium, umfassend Instruktionen, die, wenn sie in einer Benutzerausrüstung (20) und/oder in einer Netzfunktion oder einem Netzdienst (140) eines Telekommunikationsnetzes (100) ausgeführt werden, die Benutzerausrüstung (20) und/oder die Netzfunktion oder den Netzdienst (140) des Telekommunikationsnetzes (100) veranlassen, ein Verfahren nach einem der Ansprüche 1 bis 8 durchzuführen.

## Revendications

1. Procédé de fonctionnement d'un équipement utilisateur (20) avec un réseau de télécommunication (100) et pour communiquer avec au moins deux d'une pluralité de fonctions ou de services de réseau (140) du réseau de télécommunication (100) ou d'un autre réseau de télécommunication (200), dans lequel l'équipement utilisateur (20) fonctionne en utilisant au moins une première liaison de communication de strate autre que d'accès (21) et une seconde liaison de communication de strate autre que d'accès (22), la première liaison de communication de strate autre que d'accès (21) étant établie entre l'équipement utilisateur (20) et une première fonction ou un premier service de réseau (141) de la pluralité de fonctions ou de services de réseau (140), et la seconde liaison de communication de strate autre que d'accès (22) étant établie entre l'équipement utilisateur (20) et une seconde fonction ou un second service de réseau (143, 241), dans lequel la première liaison de communication de strate autre que d'accès (21) implique l'établissement d'un premier contexte de sécurité de strate autre que d'accès entre l'équipement utilisateur (20) et la première fonction ou le premier service de réseau (141) et la seconde liaison de communication de strate autre que d'accès (22) implique l'établissement d'un second contexte de sécurité de strate autre que d'accès entre l'équipement utilisateur (20) et la seconde fonction ou le second service de réseau (143, 241),
dans lequel le fonctionnement de l'équipement utilisateur (20), utilisant au moins les première et seconde liaisons de communication de strate autre que d'accès (21, 22), comprend les étapes suivantes :
- dans une première étape, la première liaison de communication de strate autre que d'accès (21) ainsi que le premier contexte de sécurité de strate autre que d'accès sont établis à l'aide de premières informations de point d'extrémité de strate autre que d'accès concernant la première fonction ou le premier service de réseau (141), et la seconde liaison de communication de strate autre que d'accès (22) ainsi que le second contexte de sécurité de strate autre que d'accès sont établis à l'aide de secondes informations de point d'extrémité de strate autre que d'accès concernant la seconde fonction ou le second service de réseau (143, 241), dans lequel les premières et secondes informations de point d'extrémité sont reçues par l'équipement utilisateur (20),
- dans une seconde étape, les première et seconde liaisons de communication de strate autre que d'accès (21, 22) sont utilisées entre leurs points d'extrémité respectifs, dans lequel un premier élément d'information du premier contexte de sécurité de strate autre que d'accès ou transmis à l'aide de celui-ci peut être référencé par un second élément d'information du second contexte de sécurité de strate autre que d'accès ou transmis à l'aide de celui-ci et/ou dans lequel un premier élément d'information du premier contexte de sécurité de strate autre que d'accès ou transmis à l'aide de celui-ci peut référencer un second élément d'information du second contexte de sécurité de strate autre que d'accès ou transmis à l'aide de celui-ci, dans lequel l'un du premier et du second élément d'information, s'il est utilisé comme élément d'information de référence, faisant référence à l'autre du premier et du second élément d'information, comprend au moins l'un parmi :
- des informations d'identificateur de contexte de sécurité de strate autre que d'accès pour la liaison de communication de strate autre que d'accès référencée ou le contexte de sécurité de strate autre que d'accès référencé,
- un identificateur d'élément d'information de l'élément d'information référencé.

2. Procédé selon la revendication 1, dans lequel la première liaison de communication de strate autre que d'accès (21) ainsi que le premier contexte de sécurité de strate autre que d'accès sont établis à l'aide de premières informations de clé et/ou d'un premier procédé de chiffrement, et dans lequel la seconde liaison de communication de strate autre que d'accès (22) ainsi que le second contexte de sécurité de strate autre que d'accès sont établis à l'aide de secondes informations de clé et/ou d'un second procédé de chiffrement, dans lequel en particulier, les premières informations de clé et/ou le premier procédé de chiffrement sont différents des secondes informations de clé et/ou du second procédé de chiffrement.

3. Procédé selon l'une des revendications précédentes, dans lequel la seconde fonction ou le second service de réseau (143, 241) est une fonction ou un service de réseau d'un autre réseau de télécommunication (200), notamment dans le cas d'une situation d'itinérance de l'équipement utilisateur (20) connecté à l'autre réseau de télécommunication (200) ou en itinérance au sein de celui-ci,
dans lequel en particulier la première fonction ou le premier service de réseau (141) et la seconde fonction ou le second service de réseau (143, 241) sont des fonctions ou des services de réseau correspondants, fournissant le même type de fonctionnalités de fonction de réseau, du réseau de télécommunication (100) et de l'autre réseau de télécommunication (200), respectivement,
dans lequel en particulier la première liaison de communication de strate autre que d'accès (21) et/ou le premier contexte de sécurité de strate autre que d'accès, d'une part, et la seconde liaison de communication de strate autre que d'accès (22) et/ou le second contexte de sécurité de strate autre que d'accès, d'autre part, sont réalisés de manière imbriquée, dans lequel en particulier la première fonction ou le premier service de réseau (141) et la seconde fonction ou le second service de réseau (143, 241) sont utilisés en parallèle par l'équipement utilisateur (20) et sont des fonctions ou des services de réseau non correspondants, fournissant les différents types de fonctionnalités de fonction de réseau.

4. Procédé selon l'une des revendications précédentes, dans lequel les informations d'identificateur de contexte de sécurité de strate autre que d'accès comprennent les informations de point d'extrémité de strate autre que d'accès du contexte de sécurité de strate autre que d'accès référencé.

5. Procédé selon l'une des revendications précédentes, dans lequel dans la communication de strate autre que d'accès impliquant l'équipement utilisateur (20) et à la fois la première fonction ou le premier service de réseau (141) et la seconde fonction ou le second service de réseau (143, 241), au moins les premier et second contextes de sécurité de strate autre que d'accès sont utilisés, en particulier pour transmettre des règles de politique de sélection de route d'équipement utilisateur,
dans lequel, en particulier, un élément d'information, ou une partie de celui-ci, est visible et/ou décodable par la première fonction ou le premier service de réseau (141) ou la seconde fonction ou le second service de réseau (143, 241) uniquement dans le cas où l'élément d'information respectif, ou une partie de celui-ci, fait partie du contexte de sécurité de strate autre que d'accès respectif.

6. Procédé selon l'une des revendications précédentes, dans lequel l'établissement d'au moins l'une parmi la première liaison de communication de strate autre que d'accès et la seconde liaison de communication de strate autre que d'accès implique l'utilisation d'une fonction ou d'un service d'amorçage d'équipement utilisateur (130), la fonction ou le service d'amorçage d'équipement utilisateur (130) soit faisant partie du réseau de télécommunication (100), soit étant accessible par l'intermédiaire du réseau de télécommunication (100) ou par un nœud de réseau de celui-ci,
dans lequel, en particulier, l'équipement utilisateur (20) demande d'abord que l'au moins une parmi la première liaison de communication de strate autre que d'accès et la seconde liaison de communication de strate autre que d'accès soit établie, dans lequel la fonction ou le service d'amorçage d'équipement utilisateur (130) fournit ensuite des informations de point d'extrémité de strate autre que d'accès (141') concernant l'au moins un(e) parmi la première fonction ou le premier service de réseau (141) et la seconde fonction ou le second service de réseau (143, 241), et les informations de point d'extrémité de strate autre que d'accès (141') sont utilisées pour établir l'au moins un parmi le premier contexte de sécurité de strate autre que d'accès et/ou le second contexte de sécurité de strate autre que d'accès et/ou pour effectuer l'authentification de l'équipement utilisateur (20) par rapport à l'un(e) parmi la première fonction ou le premier service de réseau (141) et la seconde fonction ou le second service de réseau (143, 241).

7. Procédé selon l'une des revendications précédentes, dans lequel, concernant des éléments d'informations et/ou des messages envoyés par l'équipement utilisateur (20) vers la première fonction ou le premier service de réseau (141) ou la seconde fonction ou le second service de réseau (143, 241), les informations de point d'extrémité de strate autre que d'accès respectives (141') sont incluses dans ces éléments d'informations et/ou messages envoyés par l'équipement utilisateur (20), dans lequel le réseau d'accès (110) ou le nœud de réseau d'accès (111) du réseau de télécommunication (100) utilise les informations de point d'extrémité de strate autre que d'accès (141') pour transmettre ces éléments d'information et/ou messages vers leur destination, dans lequel ces éléments d'informations et/ou messages envoyés par l'équipement utilisateur (20) comprennent notamment à la fois des informations de source, faisant référence à ou indiquant l'équipement utilisateur (20), et des informations de destination, faisant référence à ou indiquant la première fonction ou le premier service de réseau (141) ou la seconde fonction ou le second service de réseau (143, 241).

8. Procédé selon l'une des revendications précédentes, dans lequel, concernant des éléments d'informations et/ou des messages envoyés par la première fonction ou le premier service de réseau (141) ou la seconde fonction ou le second service de réseau (143, 241) vers l'équipement utilisateur (20), des informations de point d'extrémité de strate autre que d'accès de l'équipement utilisateur (20) sont incluses dans ces éléments d'informations et/ou messages envoyés par la première fonction ou le premier service de réseau (141) ou la seconde fonction ou le second service de réseau (143, 241), dans lequel le réseau d'accès (110) ou le nœud de réseau d'accès (111) du réseau de télécommunication (100) utilise les informations de point d'extrémité de strate autre que d'accès de l'équipement utilisateur (20) pour transmettre ces éléments d'information et/ou messages à l'équipement utilisateur (20).

9. Équipement utilisateur (20) destiné à fonctionner avec un réseau de télécommunication (100) et à communiquer avec au moins deux d'une pluralité de fonctions ou services de réseau (140) du réseau de télécommunication (100) ou d'un autre réseau de télécommunication (200), dans lequel l'équipement utilisateur (20) est configuré pour utiliser au moins une première liaison de communication de strate autre que d'accès (21) et une seconde liaison de communication de strate autre que d'accès (22), la première liaison de communication de strate autre que d'accès (21) étant établie entre l'équipement utilisateur (20) et une première fonction ou un premier service de réseau (141) de la pluralité de fonctions ou de services de réseau (140), et la seconde liaison de communication de strate autre que d'accès (22) étant établie entre l'équipement utilisateur (20) et une seconde fonction ou un second service de réseau (143, 241), dans lequel la première liaison de communication de strate autre que d'accès (21) implique l'établissement d'un premier contexte de sécurité de strate autre que d'accès entre l'équipement utilisateur (20) et la première fonction ou le premier service de réseau (141) et la seconde liaison de communication de strate autre que d'accès (22) implique l'établissement d'un second contexte de sécurité de strate autre que d'accès entre l'équipement utilisateur (20) et la seconde fonction ou le second service de réseau (143, 241),
dans lequel l'équipement utilisateur (20), utilisant au moins les première et seconde liaisons de communication de strate autre que d'accès (21, 22), est configuré de telle sorte que :
- la première liaison de communication de strate autre que d'accès (21) ainsi que le premier contexte de sécurité de strate autre que d'accès sont établis à l'aide de premières informations de point d'extrémité de strate autre que d'accès concernant la première fonction ou le premier service de réseau (141), et la seconde liaison de communication de strate autre que d'accès (22) ainsi que le second contexte de sécurité de strate autre que d'accès sont établis à l'aide de secondes informations de point d'extrémité de strate autre que d'accès concernant la seconde fonction ou le second service de réseau (143, 241), dans lequel l'équipement utilisateur (20) reçoit les premières et secondes informations de point d'extrémité, notamment à partir du réseau de télécommunication (100),
- les première et seconde liaisons de communication de strate autre que d'accès (21, 22) sont utilisées entre leurs points d'extrémité respectifs, dans lequel un premier élément d'information du premier contexte de sécurité de strate autre que d'accès ou transmis à l'aide de celui-ci peut être référencé par un second élément d'information du second contexte de sécurité de strate autre que d'accès ou transmis à l'aide de celui-ci et/ou dans lequel un premier élément d'information du premier contexte de sécurité de strate autre que d'accès ou transmis à l'aide de celui-ci peut référencer un second élément d'information du second contexte de sécurité de strate autre que d'accès ou transmis à l'aide de celui-ci, dans lequel l'un du premier et du second élément d'information, s'il est utilisé comme élément d'information de référence, faisant référence à l'autre du premier et du second élément d'information, comprend au moins l'un parmi :
- des informations d'identificateur de contexte de sécurité de strate autre que d'accès pour la liaison de communication de strate autre que d'accès référencée ou le contexte de sécurité de strate autre que d'accès référencé,
- un identificateur d'élément d'information de l'élément d'information référencé.

10. Système ou réseau de télécommunication (100) pour faire fonctionner un équipement utilisateur (20) avec le réseau de télécommunication (100) et pour fournir au moins deux d'une pluralité de fonctions ou de services de réseau (140), la pluralité de fonctions ou de services de réseau (140) pouvant fournir différents types de fonctionnalités de fonction de réseau, dans lequel l'équipement utilisateur (20) fonctionne en utilisant au moins une première liaison de communication de strate autre que d'accès (21) et une seconde liaison de communication de strate autre que d'accès (22), la première liaison de communication de strate autre que d'accès (21) étant établie entre l'équipement utilisateur (20) et une première fonction ou un premier service de réseau (141) de la pluralité de fonctions ou de services de réseau (140), et la seconde liaison de communication de strate autre que d'accès (22) étant établie entre l'équipement utilisateur (20) et une seconde fonction ou un second service de réseau (143, 241), dans lequel la première liaison de communication de strate autre que d'accès (21) implique l'établissement d'un premier contexte de sécurité de strate autre que d'accès entre l'équipement utilisateur (20) et la première fonction ou le premier service de réseau (141) et la seconde liaison de communication de strate autre que d'accès (22) implique l'établissement d'un second contexte de sécurité de strate autre que d'accès entre l'équipement utilisateur (20) et la seconde fonction ou le second service de réseau (143, 241),
dans lequel le système ou le réseau de télécommunication (100) est configuré de telle sorte que :
- la première liaison de communication de strate autre que d'accès (21) ainsi que le premier contexte de sécurité de strate autre que d'accès sont établis à l'aide de premières informations de point d'extrémité de strate autre que d'accès concernant la première fonction ou le premier service de réseau (141), et la seconde liaison de communication de strate autre que d'accès (22) ainsi que le second contexte de sécurité de strate autre que d'accès sont établis à l'aide de secondes informations de point d'extrémité de strate autre que d'accès concernant la seconde fonction ou le second service de réseau (143, 241), dans lequel les premières et secondes informations de point d'extrémité sont transmises, par le réseau de télécommunication (100), à l'équipement utilisateur (20),
- les première et seconde liaisons de communication de strate autre que d'accès (21, 22) sont utilisées entre leurs points d'extrémité respectifs, dans lequel un premier élément d'information du premier contexte de sécurité de strate autre que d'accès ou transmis à l'aide de celui-ci peut être référencé par un second élément d'information du second contexte de sécurité de strate autre que d'accès ou transmis à l'aide de celui-ci et/ou dans lequel un premier élément d'information du premier contexte de sécurité de strate autre que d'accès ou transmis à l'aide de celui-ci peut référencer un second élément d'information du second contexte de sécurité de strate autre que d'accès ou transmis à l'aide de celui-ci, dans lequel l'un du premier et du second élément d'information, s'il est utilisé comme élément d'information de référence, faisant référence à l'autre du premier et du second élément d'information, comprend au moins l'un parmi :
- des informations d'identificateur de contexte de sécurité de strate autre que d'accès pour la liaison de communication de strate autre que d'accès référencée ou le contexte de sécurité de strate autre que d'accès référencé,
- un identificateur d'élément d'information de l'élément d'information référencé.

11. Programme comprenant un code de programme lisible par ordinateur qui, lorsqu'il est exécuté sur un équipement utilisateur (20) et/ou sur une fonction ou un service de réseau (140) d'un réseau de télécommunication (100), amène l'équipement utilisateur (20) et/ou la fonction ou le service de réseau (140) du réseau de télécommunication (100) à effectuer un procédé selon l'une des revendications 1 à 8.

12. Support lisible par ordinateur comprenant des instructions qui, lorsqu'elles sont exécutées sur un équipement utilisateur (20) et/ou sur une fonction ou un service de réseau (140) d'un réseau de télécommunication (100), amènent l'équipement utilisateur (20) et/ou la fonction ou le service de réseau (140) du réseau de télécommunication (100) à effectuer un procédé selon l'une des revendications 1 à 8.
